(19) Europäisches Patentamt European Patent Office Office européen des brevets

(11) **EP 4 366 234 B1**

(12) **EUROPEAN PATENT SPECIFICATION**

(45) Date of publication and mention
of the grant of the patent:
**20.05.2026 Bulletin 2026/21**

(21) Application number: **22845218.1**

(22) Date of filing: **14.07.2022**

(51) International Patent Classification (IPC):
***H04L 9/40*** *(2022.01)*

(52) Cooperative Patent Classification (CPC):
**H04L 9/40; H04L 63/0876; H04L 63/102;
H04L 63/20**

(86) International application number:
**PCT/CN2022/105699**

(87) International publication number:
**WO 2023/001053 (26.01.2023 Gazette 2023/04)**

(54) **DEVICE VERIFICATION METHOD, APPARATUS AND SYSTEM**

VORRICHTUNGSVERIFIZIERUNGSVERFAHREN, -VORRICHTUNG UND -SYSTEM

PROCÉDÉ, APPAREIL ET SYSTÈME DE VÉRIFICATION DE DISPOSITIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.07.2021 CN 202110826548
29.09.2021 CN 202111167936**

(43) Date of publication of application:
**08.05.2024 Bulletin 2024/19**

(73) Proprietor: **Huawei Technologies Co., Ltd.
Longgang
Shenzhen, Guangdong 518129 (CN)**

(72) Inventors:
• **XUE, Li
Shenzhen, Guangdong 518129 (CN)**
• **ZHANG, Liang
Shenzhen, Guangdong 518129 (CN)**
• **XU, Weiwang
Shenzhen, Guangdong 518129 (CN)**
• **LIU, Wenqian
Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(56) References cited:
CN-A- 104 883 346     CN-A- 105 656 843
CN-A- 109 561 429     US-A1- 2016 212 099
US-A1- 2017 111 373   US-A1- 2018 109 551

**Description**

**TECHNICAL FIELD**

This application relates to the field of communication technologies, and in particular, to a device authentication method and system, and an apparatus.

**BACKGROUND**

A large number of Internet of Things (Internet of Things, IoT) devices exist in major industries such as smart campus, education, manufacturing, finance, and healthcare. These IoT devices have poor self-protection capabilities and are vulnerable to attacks or spoofing. Therefore, a network needs to perform authentication on IoT devices that is to perform access.

US 2016/212099 A1 describes management of IoT devices through a private cloud. An IoT device is coupled to a gateway. A request from the IoT device to connect to a private cloud, wherein the private cloud is used to manage IoT devices, is received at a private cloud control center agent. An identification of the IoT device is determined. The IoT device is onboarded, using the identification, for management through the private cloud. A device profile of the IoT device is generated. The flow of data to and from the IoT device is regulated through application of IoT rules of an IoT firewall according to the device profile of the IoT device.

US 2018/109551 A1 describes that a server instructs one or more networking devices in a local area network (LAN) to form virtual network overlay in the LAN that redirects traffic associated with a particular node in the LAN to the server. The server receives the redirected traffic associated with the particular node. The server determines a node profile for the particular node based in part on an analysis of the redirected traffic. The server configures the particular node based on the determined node profile for the particular node.

**SUMMARY**

An object of the present invention is to provide a device authentication method and system, and an apparatus, to perform authentication on a terminal device. This object is solved by the subject-matter of the appended independent claims, wherein further embodiments are set out in the dependent claims.

According to a first aspect, a device authentication system is provided. The system includes a first analyzer, a second analyzer, and a first network device.

The first network device is configured to send a first-type transmission feature of a first terminal device to the second analyzer.

The first analyzer is configured to send a first authentication model to the second analyzer.

The second analyzer is configured to perform authentication on the first terminal device based on a second-type transmission feature of the first terminal device and the first authentication model.

In this application, the second analyzer performs authentication on the terminal device based on the transmission feature that is of the terminal device and that is sent by the network device and based on the authentication model sent by the first analyzer. This implements authentication of the terminal device.

Further, the authentication model is provided by the first analyzer, so that the second analyzer does not need to train the authentication model. This reduces a requirement for a computing power of the second analyzer.

Optionally, the second analyzer is further configured to: when the first terminal device fails to be authenticated, indicate the first network device to execute a policy to restrict access of the first terminal device.

The unauthenticated terminal device is restricted from accessing a network. This can reduce damage caused by the unauthenticated terminal devices to the network.

Optionally, the second analyzer is further configured to determine the policy based on the second-type transmission feature of the first terminal device.

Optionally, the second analyzer is further configured to send the second-type transmission feature of the first terminal device to the first analyzer. The first analyzer is further configured to determine the policy based on the second-type transmission feature of the first terminal device, and send the policy to the second analyzer.

Optionally, the first network device is further configured to determine the policy based on the first-type transmission feature of the first terminal device.

The policy may be determined by different devices. This enhances flexibility of the device authentication system.

Optionally, the first network device is further configured to send a first-type transmission feature of a first-type terminal device to the second analyzer. Optionally, the second analyzer is further configured to send a second-type transmission feature of the first-type terminal device to the first analyzer. Optionally, the first analyzer is further configured to obtain the first authentication model based on the second-type transmission feature of the first-type terminal device. A device type of the first-type terminal device is the same as a device type of the first terminal device.

Optionally, the system further includes a third analyzer and a second network device.

The second network device is configured to send a first-type transmission feature of a second terminal device to the third analyzer. A device type of the second terminal device is the same as the device type of the first terminal device.

The first analyzer is further configured to send a second authentication model to the third analyzer. The second authentication model is different from the first authentication model.

The third analyzer is configured to perform authentication on the second terminal device based on a second-type transmission feature of the second terminal device and the second authentication model.

For a same device type, the first analyzer selects different authentication models for different analyzers that perform authentication on terminal devices. This improves precision of device authentication.

Optionally, the second network device is further configured to send a first-type transmission feature of a second-type terminal device to the third analyzer. The third analyzer is further configured to send a second-type transmission feature of the second-type terminal device to the first analyzer. The first analyzer is further configured to obtain the second authentication model based on the second-type transmission feature of the second-type terminal device. A device type of the second-type terminal device is the same as the device type of the second terminal device.

Optionally, the first analyzer is further configured to obtain a third authentication model based on the second-type transmission feature of the first-type terminal device and the second-type transmission feature of the second-type terminal device.

Optionally, the first analyzer is further configured to obtain a target device type, and send the target device type to the second analyzer and/or the third analyzer. The second analyzer is further configured to indicate, based on the target device type, the first network device to obtain the first-type transmission feature of the first-type terminal device. The third analyzer is further configured to indicate, based on the target device type, the second network device to obtain the first-type transmission feature of the second-type terminal device.

When the device authentication model is trained, the analyzer indicates, as required, the network device to obtain a transmission feature of a terminal device corresponding to a specific device type. This can reduce consumption of network resources for training the device authentication model.

Optionally, the second analyzer is further configured to determine the first-type terminal device based on a first asset library and the target device type. The third analyzer is further configured to determine the second-type terminal device based on a second asset library and the target device type.

The first asset library or the second asset library includes at least one asset information entry. Each asset information entry includes a device type and an identifier of one or more terminal devices corresponding to the device type.

Optionally, the second analyzer or the third analyzer or both are further configured to obtain third-type transmission features of a plurality of terminal devices, and send the third-type transmission features of the plurality of terminal devices to the first analyzer. The first analyzer is further configured to obtain a device identification model based on the third-type transmission features of the plurality of terminal devices, and send the device identification model to the second analyzer and/or the third analyzer.

Optionally, the first analyzer is further configured to obtain device types of the plurality of terminal devices based on the third-type transmission features of the plurality of terminal devices and the device identification model, and obtain a third asset library based on the device types of the plurality of terminal devices and the identifiers of the plurality of terminal devices. The first analyzer is further configured to send the identifiers and the device types of the plurality of terminal devices to the second analyzer to update the first asset library, and/or send the identifiers and the device types of the plurality of terminal devices to the third analyzer to update the second asset library.

Optionally, the second analyzer is further configured to obtain a third-type transmission feature of a third terminal device, obtain a device type of the third terminal device based on the third-type transmission feature of the third terminal device and the device identification model, and update the first asset library based on the device type of the third terminal device and an identifier of the third terminal device.

Optionally, the third analyzer is further configured to obtain a third-type transmission feature of a fourth terminal device, obtain a device type of the fourth terminal device based on the third-type transmission feature of the fourth terminal device and the device identification model, and update the second asset library based on the device type of the fourth terminal device and an identifier of the fourth terminal device.

When matching the authentication model based on the device type of the to-be-authenticated terminal device, the analyzer obtains the device type of the to-be-authenticated terminal device based on the device identification model without depending on the input of an administrator. This enhances flexibility of the device authentication system.

Optionally, the second analyzer is further configured to send the device type of the third terminal device and the identifier of the third terminal device to the first analyzer. The third analyzer is further configured to send the device type of the fourth terminal device and the identifier of the fourth terminal device to the first analyzer. The first analyzer is further configured to update the third asset library based on the device type of the third terminal device and the identifier of the third terminal device and based on the device type of the fourth terminal device and the identifier of the fourth terminal device.

Optionally, the first-type transmission feature corresponds to one data flow. The first-type transmission feature is a transmission feature of the data flow in a time window. For example, a first-type transmission feature of the first terminal device is a transmission feature of a data flow of the first terminal device in the time window, and a first-type transmission feature of the second terminal device is a transmission feature of a data flow of the second terminal device in the time window.

Optionally, the transmission feature of the data flow in the time window includes a statistical feature of the data flow in the time window, and/or an access feature of the data flow in the time window.

Optionally, the second-type transmission feature is the same as the first-type transmission feature.

Optionally, the second-type transmission feature is an aggregated feature of at least one first-type transmission feature.

Optionally, the first-type transmission feature is the same as the second-type transmission feature. The second-type transmission feature is an aggregated feature of transmission features of a plurality of data flows in a time window. A transmission feature of each of the plurality of data flows in the time window includes a statistical feature of the data flow in the time window and/or an access feature of the data flow in the time window.

The foregoing implementations of the first aspect of this application may be combined with each other without causing a conflict, and combinations thereof all fall within the protection scope of this application.

According to a second aspect, a device authentication method is provided. The method is performed by a first analyzer. The first analyzer receives first-type transmission features that are of a plurality of first-type terminal devices and that are sent by a second analyzer, obtains a first authentication model based on the first-type transmission features of the plurality of first-type terminal devices, and sends the first authentication model to the second analyzer.

Optionally, the first analyzer receives first-type transmission features that are of a plurality of second-type terminal devices and that are sent by a third analyzer, obtains a second authentication model based on the first-type transmission features of the plurality of second-type terminal devices, and sends the second authentication model to the third analyzer. A device type of the second-type terminal device is the same as a device type of the first-type terminal device.

Optionally, the first analyzer obtains a third authentication model based on the first-type transmission features of the plurality of first-type terminal devices and the first-type transmission features of the plurality of second-type terminal devices, and sends the third authentication model to the second analyzer and the third analyzer.

Optionally, the first analyzer receives a first-type transmission feature that is of a first terminal device and that is sent by the second analyzer, determines a first policy based on the first-type transmission feature of the first terminal device, and sends the first policy to the second analyzer. The first terminal device is a terminal that fails to be authenticated.

Optionally, the first analyzer receives a first-type transmission feature that is of a second terminal device and that is sent by the third analyzer, determines a second policy based on the first-type transmission feature of the second terminal device, and sends the second policy to the third analyzer. The second terminal device is a terminal that fails to be authenticated.

Optionally, the first analyzer sends a target device type to the second analyzer, to indicate the second analyzer to obtain the first-type transmission features of the plurality of first-type terminal devices. The plurality of first-type terminal devices are terminals corresponding to the target device type.

Optionally, the first analyzer sends a target device type to the third analyzer, to indicate the third analyzer to obtain the first-type transmission features of the plurality of second-type terminal devices. The plurality of second-type terminal devices are terminals corresponding to the target device type.

Optionally, the first analyzer receives second-type transmission features that are of a plurality of terminal devices and that are sent by the second analyzer and/or the third analyzer, obtains a device identification model based on the second-type transmission features of the plurality of terminal devices, and sends the device identification model to the second analyzer and/or the third analyzer.

Optionally, the first analyzer obtains device types of the plurality of terminal devices based on the second-type transmission features of the plurality of terminal devices and the device identification model, to obtain an asset library. The asset library includes at least one asset information entry. Each asset information entry includes a device type and an identifier of one or more terminal devices corresponding to the device type.

Optionally, the first analyzer sends identifiers and the device types of the plurality of terminal devices to the second analyzer and/or the third analyzer.

Optionally, the first analyzer receives identifiers and device types that are of terminal devices and that are sent by the second analyzer and/or the third analyzer, to update the asset library.

The foregoing implementations of the second aspect of this application may be combined with each other without causing a conflict, and combinations thereof all fall within the protection scope of this application.

According to a third aspect, a device authentication method is provided. The method is performed by a second analyzer. The second analyzer receives a first authentication model sent by a first analyzer, obtains a first-type transmission feature of a first terminal device, and performs authentication on the first terminal device based on the first authentication model and the first-type transmission feature of the first terminal device.

Optionally, when the first terminal device fails to be authenticated, the second analyzer indicates a network device to execute a policy to restrict the first terminal device. The network device is a device that forwards a packet of the first terminal device.

Optionally, the second analyzer determines the policy based on the first-type transmission feature of the first terminal device.

Optionally, the second analyzer sends the first-type transmission feature of the first terminal device to the first analyzer, and receives the policy sent by the first analyzer. The policy is determined by the first analyzer based on the first-type transmission feature of the first terminal device.

Optionally, the policy is determined by the network device.

Optionally, the second analyzer receives a target device type sent by the first analyzer, determines, based on an asset library, a plurality of terminal devices associated with the target device type, and sends first-type transmission features of the plurality of terminal devices associated with the target device type to the first analyzer, to enable the first analyzer to obtain the first authentication model.

Optionally, the second analyzer receives a device identification model sent by the first analyzer, obtains a second-type transmission feature of a terminal device, obtaining a device type of the terminal device based on the second-type transmission feature of the terminal device and the device identification model, and updates the asset library based on the device type of the terminal device and an identifier of the terminal device.

The foregoing implementations of the third aspect of this application may be combined with each other without causing a conflict, and combinations thereof all fall within the protection scope of this application.

According to a fourth aspect, an analyzer is provided. The analyzer serves as a first analyzer, and includes a receiving module, an obtaining module, and a sending module. The receiving module is configured to receive first-type transmission features that are of a plurality of first-type terminal devices and that are sent by a second analyzer. The obtaining module is configured to obtain a first authentication model based on the first-type transmission features of the plurality of first-type terminal devices. The sending module is configured to send the first authentication model to the second analyzer.

Optionally, the receiving module is further configured to receive first-type transmission features that are of a plurality of second-type terminal devices and that are sent by a third analyzer. A device type of the second-type terminal device is the same as a device type of the first-type terminal device. Optionally, the obtaining module is further configured to obtain a second authentication model based on the first-type transmission features of the plurality of second-type terminal devices. Optionally, the sending module is further configured to send the second authentication model to the third analyzer.

Optionally, the first analyzer further includes a determining module. The receiving module is further configured to receive a first-type transmission feature that is of a first terminal and that is sent by the second analyzer and/or a first-type transmission feature that is of a second terminal and that is sent by the third analyzer. Optionally, the determining module is further configured to determine a first policy based on the first-type transmission feature of the first terminal, and/or determine a second policy based on the first-type transmission feature of the second terminal. Optionally, the sending module is further configured to send the first policy to the second analyzer and/or send the second policy to the third analyzer. The first terminal and the second terminal are terminals that fail to be authenticated.

Optionally, the sending module is further configured to send a target device type to the second analyzer, to indicate the second analyzer to obtain the first-type transmission features of the plurality of first-type terminal devices. The plurality of first-type terminal devices are terminals corresponding to the target device type.

Optionally, the sending module is further configured to send a target device type to the third analyzer, to indicate the third analyzer to obtain the first-type transmission features of the plurality of second-type terminal devices. The plurality of second-type terminal devices are terminals corresponding to the target device type.

Optionally, the receiving module is further configured to receive second-type transmission features that are of a plurality of terminal devices and that are sent by the second analyzer and/or the third analyzer. Optionally, the obtaining module is further configured to obtain a device identification model based on the second-type transmission features of the plurality of terminal devices. Optionally, the sending module is further configured to send the device identification model to the second analyzer and/or the third analyzer.

Optionally, the obtaining module is further configured to obtain device types of the plurality of terminal devices based on the second-type transmission features of the plurality of terminal devices and the device identification model, to obtain an asset library. The asset library includes at least one asset information entry. Each of the at least one asset information entry includes a device type and an identifier of one or more terminal devices corresponding to the device type.

Optionally, the sending module is further configured to send identifiers and device types of the plurality of terminal devices to the second analyzer and/or the third analyzer.

Optionally, the receiving module is further configured to receive identifiers and device types that are of terminal devices and that are sent by the second analyzer and/or the third analyzer, to update the asset library.

The foregoing implementations of the fourth aspect of this application may be combined with each other without causing a conflict, and combinations thereof all fall within the protection scope of this application.

According to a fifth aspect, an analyzer is provided. The analyzer serves as a second analyzer, and includes a receiving module, an obtaining module, and an authentication module. The receiving module is configured to receive a first authentication model sent by a first analyzer. The obtaining module is configured to obtain a first-type transmission feature of a first terminal device. The authentication module is configured to perform authentication on the first terminal device based on the first authentication model and the first-type transmission feature of the first terminal device.

Optionally, the second analyzer further includes a sending module. The sending module is configured to: when the first terminal device fails to be authenticated, send a message to a network device to indicate the network device to execute a policy to restrict the first terminal device. The network device is a device that forwards a packet of the first terminal device.

Optionally, the message includes the policy. Optionally, the second analyzer further includes a determining module. The determining module is configured to determine the policy based on the first-type transmission feature of the first terminal device.

Optionally, the message further includes the policy. Optionally, the sending module is further configured to send the first-type transmission feature of the first terminal device to the first analyzer. Optionally, the receiving module is further configured to receive the policy sent by the first analyzer.

Optionally, the receiving module is further configured to receive a target device type sent by the first analyzer. A device type of the first terminal is the target device type. Optionally, the determining module is further configured to determine, based on an asset library, a plurality of terminal devices corresponding to the target device type. Optionally, the sending module is further configured to send first-type transmission features of the plurality of terminal devices corresponding to the target device type to the first analyzer, to enable the first analyzer to obtain the first authentication model.

Optionally, the receiving module is further configured to receive a device identification model sent by the first analyzer. Optionally, the obtaining module is further configured to obtain a second-type transmission feature of a terminal device, and obtain a device type of the terminal device based on the second-type transmission feature of the terminal device and the device identification model, to update the asset library.

The foregoing implementations of the fifth aspect of this application may be combined with each other without causing a conflict, and combinations thereof all fall within the protection scope of this application.

According to a sixth aspect, a computer device is provided. The computer device includes a processor and a memory. The memory stores a program. The processor is configured to execute the program stored in the memory, to implement the device authentication method provided in any one of the second aspect or the possible implementations of the second aspect, or the device authentication method provided in any one of the third aspect or the possible implementations of the third aspect.

According to a seventh aspect, a computer-readable storage medium is provided. The computer-readable storage medium includes instructions. When the instructions are run on a computer, the computer is enabled to perform the device authentication method provided in any one of the second aspect or the possible implementations of the second aspect, or the device authentication method provided in any one of the third aspect or the possible implementations of the third aspect.

According to an eighth aspect, a computer program product is provided. The computer program product includes program code. When the computer runs the computer program, the computer is enabled to perform the device authentication method provided in any one of the second aspect or the possible implementations of the second aspect, or the device authentication method provided in any one of the third aspect or the possible implementations of the third aspect.

## BRIEF DESCRIPTION OF DRAWINGS

FIG. 1 is a schematic diagram of an implementation environment according to an embodiment of this application;

FIG. 2 is a flowchart of a device authentication method according to an embodiment of this application;

FIG. 3 is a schematic diagram of an access rule list according to an embodiment of this application;

FIG. 4 is a flowchart of a device identification method according to an embodiment of this application;

FIG. 5 is a schematic diagram of an asset library according to an embodiment of this application;

FIG. 6 is a schematic diagram of a device authentication method according to an embodiment of this application.

FIG. 7 is a schematic diagram of a logical structure of a first analyzer according to an embodiment of this application;

FIG. 8 is a schematic diagram of a logical structure of a second analyzer according to an embodiment of this application;

FIG. 9 is a schematic diagram of a hardware structure of an electronic device according to an embodiment of this application; and

FIG. 10 is a schematic diagram of a device authentication system according to an embodiment of this application.

## DESCRIPTION OF EMBODIMENTS

To make the objectives, technical solutions, and advantages of this application clearer, the following further describes the implementations of this application in detail with reference to the accompanying drawings.

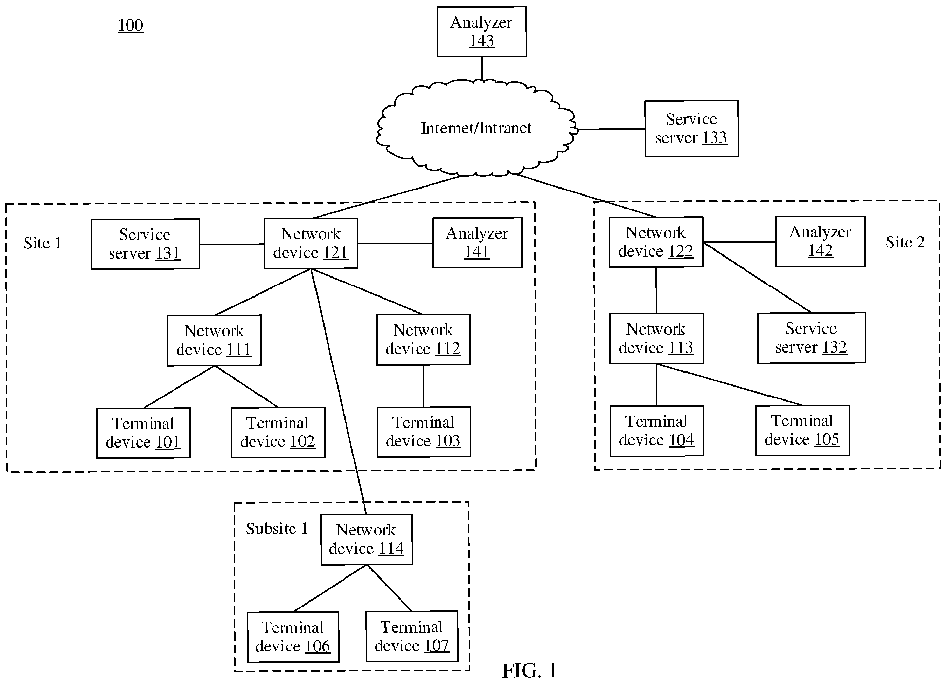

FIG. 1 is a schematic diagram of an implementation environment according to an embodiment of this application. As shown in FIG. 1, the implementation environment includes a communication network 100. The communication network 100 may be any network, for example, an enterprise campus network, a campus network, or a carrier network. The communication network 100 includes a plurality of terminal devices 101 to 107 and a plurality of network devices. Each terminal device accesses the Internet (internet) or an intranet (intranet) by using a corresponding network device, to access a service provided by a service server. For example, terminal devices 101 and 102 are connected to a network device 111, a terminal device 103 is connected to a network device 112, and terminal devices 104 and 105 are connected to a network device 113. The network device 111 connects the terminal devices 101 and 102 to the Internet or the intranet by using a network device 121, so that the terminal devices 101 and 102 can access related services. The network device 112 connects the terminal device 103 to the Internet/intranet by using the network device 121, so that the terminal device 103 can access a related service. The network device 113 connects the terminal devices 104 and 105 to the Internet/intranet by using a network device 122, so that the terminal devices 104 and 105 can access related services. The foregoing service is provided by a service server 131 or a service server 132.

Optionally, the terminal device is an IoT device. For example, in a financial system, the terminal device may be an automated teller machine (automated teller machine, ATM), a self-service query terminal, a card dispenser, an intelligent counter, a camera, or the like. For example, the terminal device 101 and the terminal device 104 may be ATMs, the terminal device 102 and the terminal device 105 may be cameras, and the terminal device 103 may be a card dispenser.

The network device may be a switch, a router, a wireless access point, a base station, or the like. For example, the network device 111 may be a wireless access point, and the terminal devices 101 and 102 access the network device 111 over a wireless local area network. For another example, the network device 112 may be a switch, and the terminal device 103 accesses the network device 112 in a wired access manner. For another example, the network device 113 may be a base station, and the terminal devices 104 and 105 access the network device 113 over a cellular network. For another example, the network device 121 and the network device 122 may be routers. The network devices 111 to 113 are directly connected to a terminal device. Therefore, the network devices 111 to 113 may also be referred to as access devices. The network devices 121 and 122 are not directly connected to the terminal device, but forward a packet that is of the terminal device and that is sent by an access device. The network devices 121 and 122 may also be referred to as aggregation devices.

The service servers 131 to 133 may be a physical server, a physical server cluster, a virtual machine, a virtual machine cluster, or the like. The service servers can be deployed in a plurality of locations. For example, the service server 133 may be deployed in a public cloud, a private cloud, or a data center of an enterprise. For another example, the service server 131 and the service server 132 are separately deployed at two branch sites (site) of an enterprise. The service server 131 is deployed at a site 1, and the service server 132 is deployed at a site 2. The service server may provide a plurality of services, for example, a video service, a deposit and withdrawal service, and the like.

To prevent a terminal device from being attacked or maliciously spoofed, the communication network 100 needs to perform authentication on the terminal device. When the terminal device fails to be authenticated, the communication network 100 may restrict access of the terminal device to the communication network 100. In view of this, the communication network 100 may further include a plurality of analyzers, for example, analyzers 141 to 143. The analyzers 141 and 142 are deployed at two branch sites of an enterprise respectively, and the analyzer 143 is deployed in a data center of the enterprise, a headquarters site of the enterprise, a private cloud, or a public cloud. The analyzers 141 to 143 may be a server, a server cluster, a virtual machine, a virtual machine cluster, or the like. The analyzers 141 to 143 may alternatively be a network device with a computing capability. For example, when the network device 121 has a computing capability, the network device 121 may alternatively be the analyzer 141.

The analyzer deployed at the branch site performs authentication on a terminal device at the branch site. The analyzer performs authentication on the terminal device based on a transmission feature of the terminal device and a device authentication model. The transmission feature of the terminal device is collected by the network device. The network device may be an access device connected to the terminal device, or an aggregation device that forwards a packet of the terminal device. The device authentication model is trained by another analyzer and sent to the analyzer at the branch site. The analyzer at the branch site performs authentication on the terminal device at the branch site, so that the transmission feature of the terminal device does not need to be transmitted to the outside of the site. This reduces a delay of terminal authentication and network resource consumption caused by terminal authentication, and improves timeliness of terminal authentication.

The another analyzer may be deployed in the data center of the enterprise, the headquarters site of the enterprise, the private cloud, or the public cloud. For example, the analyzer 141 receives a transmission feature that is of the terminal device 101 and that is sent by the network device 111 and a device authentication model sent by the analyzer 143, and performs authentication on the terminal device 101 based on the transmission feature and the device authentication model. For another example, the analyzer 142 receives a transmission feature that is of the terminal device 105 and that is sent by the network device 113 and a device authentication model sent by the analyzer 143, and performs authentication on the terminal device 105 based on the transmission feature and the device authentication model. In this case, the analyzer 141 is configured to perform authentication on a terminal device at the site 1, the analyzer 142 is configured to perform authentication on a terminal device at the site 2, and the analyzer 143 is configured to train an authentication model and send the authentication model to the analyzer 141 and the analyzer 142. The analyzer 143 trains all authentication models of various device types, and the analyzer (for example, the analyzers 141 and 142) at the branch site does not need to train the authentication models. This can reduce a requirement for a computing power of the analyzers deployed at the branch sites. It may be understood that, when the analyzer 143 is deployed at the headquarters site of the enterprise, and a terminal device is deployed at the headquarters site, the analyzer 143 may also be configured to perform authentication on the terminal device at the headquarters site. Alternatively, another analyzer may be further deployed at the headquarters site. The another analyzer receives the device authentication model sent by the analyzer 143, and performs authentication on a terminal device at the headquarters site.

The another analyzer may alternatively be an analyzer deployed at another branch site. For example, the analyzer 141 receives a transmission feature that is of the terminal device 101 and that is sent by the network device 111 and a device authentication model sent by the analyzer 142, and performs authentication on the terminal device 101 based on the transmission feature and the device authentication model. For another example, the analyzer 142 receives a transmission feature that is of the terminal device 105 and that is sent by the network device 113 and a device authentication model sent by the analyzer 141, and performs authentication on the terminal device 105 based on the transmission feature and the authentication model. For example, if a device type of the terminal device 101 is ATM, the device authentication model sent by the analyzer 142 is an ATM authentication model. If a device type of the terminal device 105 is a camera, the device authentication model sent by the analyzer 141 is a camera authentication model. In this case, the analyzer at each site is configured to perform authentication on the terminal device at each site. In addition, the analyzer at each site may also be configured to perform distributed training on the device authentication model. Analyzers at different sites are configured to train authentication models of different device types. Analyzers at branch sites need to train authentication models of only a few device types. This can also reduce the requirement for the computing power of the analyzers deployed at the branch sites.

When the terminal device fails to be authenticated, the analyzer configured to perform authentication on the terminal device indicates the network device connected to the terminal device to execute a policy to restrict access of the terminal device to the network. The policy may be determined by the analyzer that performs authentication on the terminal device, may be determined by the network device, or may be determined by another analyzer (for example, an analyzer that trains an authentication model). For example, when the terminal device 101 fails to be authenticated, the analyzer 141 indicates the network device 111 to execute the policy to restrict access of the terminal device 101 to the network. The policy may be determined by the analyzer 141. In this case, the analyzer 141 sends the policy to the network device 111, to indicate the network device 111 to execute the policy. The policy may alternatively be determined by the analyzer 143. In this case, the analyzer 141 sends the transmission feature of the terminal device 101 to the analyzer 143. The analyzer 143 determines the policy based on the transmission feature of the terminal device 101, and sends the policy to the analyzer 141. The analyzer 141 then sends the policy to the network device 111, to indicate the network device 111 to execute the policy. The policy may alternatively be determined by the network device 111. In this case, the analyzer 141 sends a message to the network device 111, to notify that the terminal device 101 fails to be authenticated, and the network device 111 determines the policy and executes the policy. The policy may alternatively be determined by the network device 121. In this case, the analyzer 141 sends a message to the network device 121 to notify that the terminal device 101 fails to be authenticated, the network device 121 determines the policy, and the network device 121 executes the policy or indicates the network device 111 to execute the policy. For another example, when the terminal device 105 fails to be authenticated, the analyzer 142 indicates the network device 113 to execute the policy to restrict access of the terminal device 105 to the network. The policy may be determined by the analyzer 142. In this case, the analyzer 142 sends the policy to the network device 113, to indicate the network device 113 to execute the policy. The policy may alternatively be determined by the analyzer 143. In this case, the analyzer 142 sends the transmission feature of the terminal device 105 to the analyzer 143. The analyzer 143 determines the policy based on the transmission feature of the terminal device 105, and sends the policy to the analyzer 142. The analyzer 142 then sends the policy to the network device 113, to indicate the network device 113 to execute the policy. The policy may alternatively be determined by the network device 113. In this case, the analyzer 142 sends a message to the network device 112, to notify that the terminal device 105 fails to be authenticated, and the network device 113 determines the policy and executes the policy.

The analyzer at the branch site may further perform authentication on a terminal device outside the branch site. For example, as shown in FIG. 1, the site 1 may be further connected to a subsite 1. For example, the communication network 100 is a communication network of a bank, and sites 1 to N are networks of provincial branches of the bank. In this case, the subsite 1 connected to the site 1 may be a network of a city branch in the province. For example, terminal devices 106 and 107 are deployed at the subsite 1. The terminal devices 106 and 107 are connected to the network device 121 at the site 1 through a network device 114. The network device 114 may be a switch. The terminal device 106 may be an ATM, and the terminal device 107 may be a camera. In this case, the analyzer 141 at the site 1 may be further configured to perform authentication on the terminal devices 106 and 107.

The communication network 100 may further include another device. For example, the analyzer 141 may be connected to the network device 121 through another network device, and the service server 132 may be connected to the network device 122 through another network device. For another example, the communication network may further include another site, and a plurality of terminal devices, a plurality of network devices, and an analyzer are deployed at the another site.

For detailed solutions of embodiments of this application, refer to the following descriptions.

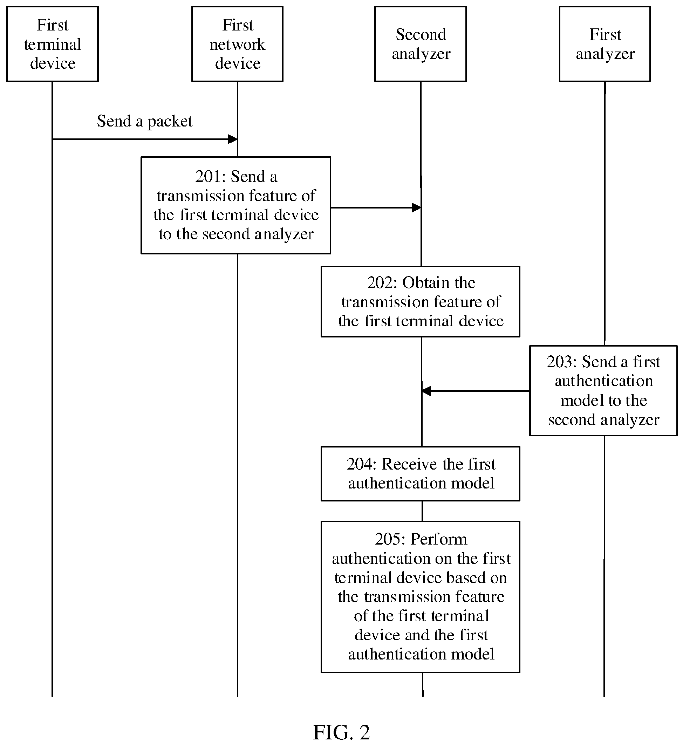

FIG. 2 is a flowchart of a device authentication method according to an embodiment of this application. The method includes the following steps.

Step 201: A first network device sends a transmission feature of a first terminal device to a second analyzer.

The transmission feature of the first terminal device includes at least one first-type transmission feature of the first terminal device. One first-type transmission feature corresponds to one data flow of the first terminal device. The first-type transmission feature is a transmission feature of the corresponding data flow in a time window. The transmission feature of the data flow in the time window includes a statistical feature of the data flow in the time window. The statistical feature of the data flow in the time window includes one or more types of the following information: a tuple of the data flow, a quantity of data flow packets, a size of a data flow packet, a time interval between data flow packets, an accumulated sum of sizes of data flow packets, an accumulated sum of squares of sizes of data flow packets, a quantity of packets whose packet size is 0 in the data flow, and a quantity of packets whose packet size is not 0 in the data flow. If the data flow is a Transmission Control Protocol (Transmission Control Protocol, TCP) data flow, the statistical feature of the data flow in the time window may further include one or more types of the following information: a TCP window size of a data flow packet, an accumulated sum of TCP window sizes of data flow packets, an accumulated sum of squares of TCP windows sizes of data flow packets, a quantity of synchronization (synchronization, SYN) packets of the data flow, a quantity of synchronization (SYN)-acknowledgment (acknowledgment, ACK) packets of the data flow, and a quantity of finish (FIN)-acknowledgment (ACK) packets. The data flow packet is a packet of the data flow in the time window. For example, the quantity of data flow packets is a quantity of packets of the data flow in the time window. The tuple of the data flow may be a 5-tuple of the data flow. The 5-tuple of the data flow includes a source internet protocol (Internet Protocol, IP) address, a destination IP address, a source port, a destination port, and a protocol type of the data flow. The statistical feature of the data flow in the time window may reflect a packet size distribution feature of the data flow in the window, a packet interval distribution feature of the data flow in the time window, a packet flag feature (for example, SYN, ACK, FIN, or the like) of the data flow in the time window, or the like. The terminal device has a statistical feature that matches a device type of the terminal device. For example, an ATM uses human-computer interaction. Therefore, an interval between data flow packets of the ATM is large. In addition, interaction content of the ATM is concise. For example, a request message may include a withdrawal instruction and a withdrawal amount, and a reply message may include a consent instruction or a disapproval instruction. Therefore, a size of a data flow packet of the ATM is very small, for example, less than 50 bytes. Therefore, if data flow packets of an ATM are very large (for example, 1500 bytes) or an interval between the data flow packets of the ATM is very small (for example, 1 ms), the ATM may be an abnormal terminal device.

The transmission feature of the data flow in the time window may further include an access feature of the data flow. The access feature of the data flow indicates an access rule of the terminal device to a service server. The access rule may include one or more of the following: a protocol (for example, the TCP, the User Datagram Protocol (User Datagram Protocol, UDP), or the Internet Control Message Protocol (Internet Control Message Protocol, ICMP)) used by the terminal device to access the service server, a source port and a destination port that are used by the terminal device to access the service server, and an IP address used by the terminal device to access the service server. The source port used by the terminal device to access the service server is a port of the terminal device. The terminal device interacts with the service server through the port. The destination port used by the terminal device to access the service server is a port of the service server. The service server interacts with the terminal device through the port. The access rule of the terminal device to the service server may be determined. For example, the ATM can access only a fixed port of an ATM server, and an IP address of the ATM server is also fixed. If the ATM attempts to access another port of the ATM server, the ATM may be an abnormal terminal device. The access rule may further include an access time rule. For example, a window service device at a bank outlet may access the service server only during working time (for example, 8:00-18:00 on weekdays), and the ATM may access the service server throughout the day. If the window service device has a data flow at 21:00, the window service device may be an abnormal terminal device.

When the first terminal device has a plurality of data flows in the time window, the transmission feature of the first terminal device includes a plurality of first-type transmission features.

The first network device is a network device through which a packet of the first terminal device necessarily flows. For example, the first network device may be an access device or an aggregation device of the first terminal device. For example, as shown in FIG. 1, if the first terminal device is the terminal devices 101 and 102, the first network device may be the network device 111 or the network device 121. If the first terminal device is the terminal device 103, the first network device may be the network device 112 or the network device 121. If the first terminal device is the terminal devices 106 and 107, the first network device may be the network device 114 or the network device 121. If the first terminal device is the terminal devices 104 and 105, the first network device may be the network device 113 or the network device 122. The following uses an example in which the first network device is the network device 111 and the first terminal device is the terminal devices 101 and 102 for description.

The network device 111 may obtain transmission features of the terminal devices 101 and 102 in the time window. For example, the time window may be 5 minutes. The network device 111 collects packets for 5 minutes each time, classifies the packets into a plurality of data flows based on a 5-tuple of the packets, and then obtains a transmission feature of each data flow. The network device 111 may continuously collect packets. For example, the network device 111 collects packets at an interval of 5 minutes and for 5 minutes each time. The network device 111 may alternatively intermittently collect packets. For example, the network device 111 may collect packets for 5 minutes each time and at an interval of 1 hour. For another example, the network device 111 may start collecting at a specified moment, for example, 9:00, 12:00, 15:00, and 20:00, and each collection lasts 5 minutes. The network device 111 associates a transmission feature of a data flow in the window with each terminal device. For example, the network device 111 may distinguish data flows based on network addresses of terminal devices, to associate the data flows with each terminal device. The network address may be an IP address of the terminal device or a media access control (media access control, MAC) address of the terminal device. The following uses an example in which the network address is an IP address of the terminal device for description. The network device 111 associates, with the terminal device 101, a data flow whose source IP address is the same as an IP address of the terminal device 101 in an uplink data flow and a data flow whose destination IP address is the same as the IP address of the terminal device 101 in a downlink data flow. The network device 111 associates, with the terminal device 102, a data flow whose source IP address is the same as an IP address of the terminal device 102 in an uplink data flow and a data flow whose destination IP address is the same as the IP address of the terminal device 102 in a downlink data flow. A transmission feature of a data flow associated with the terminal device 101 is a first-type transmission feature of the terminal device 101. A transmission feature of a data flow associated with the terminal device 102 is a first-type transmission feature of the terminal device 102. When the network device 111 collects packets of a plurality of data flows of the terminal device 101 or the terminal device 102 in the time window, the terminal device 101 or the terminal device 102 corresponds to a plurality of first-type transmission features. The network device 111 may determine that a data flow packet obtained in a connection direction of the terminal device is a packet of an uplink data flow, and determine that a data flow packet obtained opposite to the connection direction of the terminal device is a packet of a downlink data flow. For example, the network device 111 determines that a packet received from a port connected to the terminal device 101 or the terminal device 102 is a packet of an uplink data flow, and determines that a packet received from a port connected to the network device 121 is a packet of a downlink data flow.

Alternatively, the network device may not determine the IP address of the terminal device, but only classify the collected packets based on the IP address to obtain data flow packets of each terminal device. For example, the network device 111 uses a source IP address in the uplink data flow and a destination IP address in the downlink data flow as a determining IP address, and considers packets with a same determining IP address as data flow packets of a same terminal device.

After obtaining the first-type transmission feature of the terminal device, the network device sends the first-type transmission feature of the terminal device to the second analyzer. The second analyzer may be an analyzer at a branch site at which the network device is located. For example, after obtaining the first-type transmission feature of the terminal device 101 or the terminal device 102, the network device 111 sends the transmission feature to the analyzer 141.

The network device may further aggregate a plurality of first-type transmission features of one terminal device to obtain a second-type transmission feature of the terminal device, and send the second-type transmission feature of the terminal device to the second analyzer. The second-type transmission feature includes one or more types of the following information: an access rule hit rate, a total quantity of data flows, a total quantity of packets, a total packet size, port fluctuation, an average TCP window size, a total quantity of SYN packets, a total quantity of SYN-ACK packets, and a total quantity of FIN-ACK packets, a packet size distribution feature, a packet interval distribution feature, and the like.

The packet size distribution feature may be represented by a mean value of packet sizes and a standard deviation of packet sizes. The packet interval distribution feature may be represented by a mean value and a standard deviation of time intervals between packets.

The port fluctuation indicates fluctuation of the port of the first terminal device in the time window. In normal service interaction, although port numbers on a terminal device side are random values, the port numbers also increase in ascending order. The port of the terminal device may be a source port of an uplink data flow or a destination port of a downlink data flow. The port fluctuation may be fluctuation of one or more of the following ports: the source port of the uplink data flow and the destination port of the downlink data flow. The fluctuation of any port may be represented by a standard deviation or a variance of the port. For example, the port fluctuation of the first terminal device in the time window may include fluctuation of the source port of the uplink data flow. The network device may obtain source ports of a plurality of uplink data flows of the first terminal device in the time window, and calculate a standard deviation of the source ports of the plurality of upstream data flows to obtain source port fluctuation of the upstream data flows. For another example, the port fluctuation of the first terminal device in the time window may further include fluctuation of the destination port of the downlink data flow of the first terminal device. The network device may obtain destination ports of a plurality of downlink data flows of the first terminal device in the time window, and calculate a standard deviation of the destination ports of the plurality of downlink data flows to obtain destination port fluctuation of the downlink data flows. A data flow received by the network device from the port on the terminal device side is an uplink data flow, and a data flow in an opposite direction is a downlink data flow.

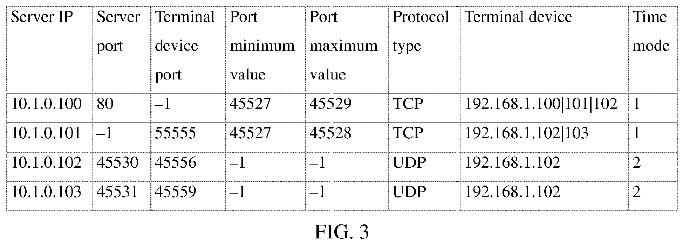

The access rule hit rate indicates an access rule compliance degree of the data flow of the first terminal device in the time window. Access rules of terminal devices generally meet specific requirements. For example, one terminal device is allowed to access a service server of IP A, and another terminal device is not allowed to access the service server. For another example, a terminal device can access only a port 80 of a service server of IP B. For another example, a terminal device can access a service server of IP C only through a port 6550. FIG. 3 shows a schematic diagram of an access rule list. A first row indicates that terminal devices 192.169.1.100-102 are allowed to access a port 80 of a server 10.1.0.100 through ports 45527 to 45529 based on the TCP. A second row indicates that terminal devices 192.168.1.102-103 are allowed to access ports 45527 and 45528 of a server 10.1.0.101 through a port 55555 based on the TCP. A third row indicates that a terminal device 192.168.1.102 is allowed to access a port 45530 of a server 10.1.0.102 through a port 45556 based on the UDP. A fourth row indicates that the terminal device 192.168.1.102 is allowed to access a port 45531 of a server 10.1.0.103 through a port 45559 based on the UDP. A time mode indicates a time period during which a data flow used by a terminal device to access a server should occur. For example, a working period (for example, [8:00, 18:00] on a workday) may be set to a time mode 1, and a non-working period (for example, (18:00, 8:00 in the next day)) may be set to a time mode 2. The time mode 1 in the first row indicates that the terminal device 192.168.1.100-102 should access the server 10.1.0.100 during the working period. The time mode 2 in the third row indicates that the terminal device 192.168.1.102 should access the server 10.1.0.102 during the non-working period. After obtaining a plurality of data flows of the terminal device, the network device may compare 5-tuples of the data flows and time at which the data flows are collected with the access rule list shown in FIG. 3. If a data flow matches the access rule list, an access rule of the data flow meets the requirement. If a data flow cannot match the access rule list, an access rule of the data flow does not meet the requirement. The access rule compliance degree of the terminal device is obtained by dividing a quantity of data flows that meet the requirement by a total quantity of data flows. For example, if the IP address of the terminal device 101 is 192.168.1.102, the network device 111 collects five data flows of the terminal device 101 from 15:00 to 15:05:

source IP address: 192.168.1.102, source port: 45527, destination IP address: 10.1.0.100, destination port: 80, and protocol: TCP;

source IP address: 192.168.1.102, source port: 55555, destination IP address: 10.1.0.101, destination port: 45528, and protocol: TCP;

source IP address: 192.168.1.102, source port: 45529, destination IP address: 10.1.0.100, destination port: 80, and protocol: TCP;

source IP address: 192.168.1.102, source port: 45556, destination IP address: 10.1.0.102, destination port: 45530, and protocol: UDP; and

source IP address: 10.1.0.103, source port: 45531, destination IP address: 192.168.1.102, destination port: 800, and protocol: UDP.

Access rules of the first data flow and the third data flow can match the first row of the access rule list shown in FIG. 3. An access rule of the second data flow can match the first row of the access rule list shown in FIG. 3. The access rules of the three data flows meet the requirement. A 5-tuple of the fourth data flow can match the third row of the access rule list shown in FIG. 3, but an occurrence time period of the fourth data flow cannot match the time mode in this row. Because of a destination port and an occurrence time period of the fifth data flow, the fifth data flow cannot match any row in the access rule list shown in FIG. 3. That is, access rules of the fourth and fifth data flows do not meet the requirement. Therefore, the access rule compliance degree of the terminal device 101 in the time window is 3/5 = 0.6.

It may be understood that the time mode may further include another value. For example, the time of a whole day may be divided into four time periods: [8:00,12:00], (12:00, 14:00), [14:00,18:00], and (18:00, 8:00 in the next day). In this case, the time modes may include 1, 2, 3, and 4. 1 indicates that the data flow should occur at [8:00, 12:00]. 2 indicates that the data flow should occur at (12:00, 14:00). 3 indicates that the data flow should occur at [14:00, 18:00]. 4 indicates that the data flow should occur at (18:00, 8:00 in the next day).

The transmission feature of the first terminal device may alternatively be obtained by another device. For example, a network probe attached to the network device side obtains the transmission feature of the terminal device. For example, the network probe may be attached to the network device 111 in FIG. 1, and the network probe has a computing capability. The network device 111 may mirror a data flow to the network probe, and the network probe calculates the transmission feature of the first terminal device in the time window based on a mirror data flow. For another example, the first network device sends or mirrors the data flow of the first terminal device to the second analyzer, and the second analyzer calculates the transmission feature of the first terminal device based on the data flow of the first terminal.

Step 202: The second analyzer obtains the transmission feature of the first terminal device.

In response to that the first network device sends the transmission feature of the first terminal device, the second analyzer receives the transmission feature to obtain the transmission feature of the first terminal. In response to that the first network device sends or mirrors the data flow of the first terminal device, the second analyzer performs calculation based on the data flow to obtain the transmission feature of the first terminal device.

Step 203: A first analyzer sends a first authentication model to the second analyzer.

The second analyzer is an analyzer at a site at which the first network device is located. The first analyzer is an analyzer that trains an authentication model. For example, if the first network device is the network device 111, the second analyzer may be the analyzer 141, and the first analyzer may be the analyzer 143. When the authentication model is trained by using a distributed architecture, the first analyzer may alternatively be the analyzer 142. For another example, if the first network device is the network device 113, the second analyzer may be the analyzer 142, and the first analyzer may be the analyzer 143. When the authentication model is trained by using a distributed architecture, the first analyzer may alternatively be the analyzer 141.

The first authentication model is an authentication model corresponding to a device type of the first terminal device. For example, if the first terminal device is a camera, the first authentication model is a camera authentication model. If the first terminal device is an ATM, the first authentication model is an ATM authentication model. The first analyzer may send all obtained authentication models to the second analyzer. For example, the analyzer 143 sends the obtained authentication models of all device types to the analyzers at branch sites, for example, the analyzer 141 and the analyzer 142. For another example, the analyzer 141 sends an obtained ATM authentication model to the analyzer 142 and the analyzer 143. The analyzer 142 sends an obtained camera authentication model to the analyzer 141 and the analyzer 143. The analyzer 143 sends an obtained card dispenser authentication model to the analyzer 141 and the analyzer 142. The first analyzer may alternatively send the authentication model to the second analyzer on request. For example, the first analyzer further provides an input interface. An administrator may enter a to-be-authenticated device type in the input interface, and the first analyzer sends an authentication model of a device type specified by the administrator to the second analyzer. For another example, the second analyzer may further send a message to the first analyzer to actively request an authentication model of a specified device type, and the first analyzer sends the authentication model of the specified device type to the second analyzer.

The first analyzer may perform training based on a plurality of transmission features of a plurality of terminal devices corresponding to one device type, to obtain an authentication model of the device type. For example, if the first analyzer is the analyzer 143, the analyzer 143 may collect, by using the analyzer 141 and the analyzer 142, a plurality of transmission features of a plurality of terminal devices corresponding to each device type for training. For example, the analyzer 141 receives transmission features that are of the terminal device 101 in a plurality of time windows and of the terminal device 102 in a plurality of time windows and that are sent by the network device 111, transmission features that are of the terminal device 103 in a plurality of time windows and that are sent by the network device 112, and transmission features that are of the terminal device 106 in a plurality of time windows and of the terminal device 107 in a plurality of time windows and that are sent by the network device 114, and sends these transmission features to the analyzer 143. The analyzer 142 receives transmission features that are of the terminal device 104 in a plurality of time windows and of the terminal device 105 in a plurality of time windows and that are sent by the network device 113, and sends these transmission features to the analyzer 143. The analyzer 143 receives a plurality of transmission features that are of the terminal devices 101 to 107 and that are sent by the analyzer 141 and the analyzer 142, and separately trains authentication models of device types corresponding to the terminal devices 101 to 107. For example, the analyzer 143 trains the ATM authentication model based on the transmission features of the terminal devices 101, 104, and 106, the camera authentication model based on the transmission features of the terminal devices 102, 105, and 107, and the card dispenser authentication model based on the transmission features of the terminal device 103.

Terminal devices of a same device type at different sites may have different transmission features. For example, the terminal device 102 at the site 1 and the terminal device 107 at the subsite 1 may access the service server 131 but cannot access the service server 132, and the terminal device 105 at the site 2 may access the service server 132 but cannot access the service server 131. If the analyzer 143 trains an authentication model based on transmission features of the terminal devices 102, 105, and 107, it may be mistakenly considered that all the terminal devices of this type can access the service servers 131 and 132. When the network device 113 collects a data flow used by the terminal device 105 to access the service server 131, the analyzer 142, based on the authentication model, mistakenly determines that the terminal device 105 is authenticated. Therefore, the first analyzer may further train an authentication model for a device type only based on transmission features of terminal devices corresponding to the device type at a same site. This can further improve accuracy of device authentication. For example, the analyzer 143 trains a first authentication model of the ATM based on transmission features of the terminal device 101 and the terminal device 106, and sends only the first authentication model to the analyzer 141. The analyzer 141 performs authentication on the terminal device 101 and the terminal device 106 based on the first authentication model. The analyzer 143 trains a second authentication model of the ATM based on the transmission features of the terminal device 104, and sends only the second authentication model to the analyzer 142. The analyzer 142 performs authentication on the terminal device 104 based on the second authentication model. For a same device type, the first analyzer may train an authentication model of the device type for a site based on transmission features at the site by default. The first analyzer may also determine, based on the input of the administrator, a dataset for training an authentication model. For example, if the administrator only specifies, in the input interface of the first analyzer, that the camera needs to distinguish datasets, the first analyzer separately trains, based on transmission features of camera devices at each site, the camera authentication model for each site. For another device type, the first analyzer trains an authentication model for the device type based on transmission features of all terminal devices corresponding to the device type. The administrator may alternatively specify a dataset of a device type in the input interface. For example, for a camera, the administrator specifies, in the input interface of the analyzer 143, that a dataset of the site 1 is transmission features of camera devices at the site 1, a dataset of the site 2 is transmission features of camera devices at the site 2, and datasets of a site 3 and a site 4 are transmission features of all camera devices at the site 3 and the site 4.

The administrator may alternatively specify a device type in the input interface of the first analyzer to indicate the first analyzer to train an authentication model only for the device type. The first analyzer sends the device type to the second analyzer, and the second analyzer queries an asset library to determine an identifier of a terminal device corresponding to the device type, and indicates the network device to collect a transmission feature of the terminal device corresponding to the identifier. The asset library is used to record a device type and an identifier of one or more terminal devices corresponding to the device type. The asset library includes at least one asset information entry. Each asset information entry includes a device type and an identifier of one or more terminal devices corresponding to the device type. The identifier of the terminal device may be a network address of the terminal device, for example, an IP address or a MAC address.

The plurality of time windows may be all time windows in a specified time period. For example, the analyzer 141 and the analyzer 142 collect transmission features of each terminal device in every 5 minutes within 30 days, and send the transmission features to the analyzer 143. The plurality of time windows may alternatively be a specified quantity of time windows. For example, the analyzer 141 and the analyzer 142 collect transmission features of 200 thousand time windows for each device type. The specified time period or the specified quantity may be a default value, or may be specified by a user. For example, the administrator enters the specified time period or the specified quantity in the input interface of the first analyzer. The administrator may also enter a value of a time window. For example, a default time window is 5 minutes. The administrator may set the time window to 1 minute in the input interface.

The transmission feature may be the first-type transmission feature in step 201, or may be the second-type transmission feature in step 201. Types of information included in the transmission feature may be a default value. For example, the transmission feature includes all types of information included in the first-type transmission feature in step 201, or the transmission feature includes all types of information included in the second-type transmission feature in step 201. The administrator may alternatively specify, in the input interface of the first analyzer, types of information included in the transmission feature. The first analyzer sends an indication message to the second analyzer as specified by the administrator, and the second analyzer indicates, based on the message, the network device to collect the transmission feature as required by the administrator.

The first analyzer uses a plurality of transmission features of a device type as an input and an output of an initial model, and performs training to obtain an authentication model of the device type. Optionally, the authentication model is an unsupervised deep neural network model, for example, a deep autoencoder model. The authentication model includes an encoder (encoder) and a decoder (decoder). A transmission feature $X = [x_1, x_2, ..., x_n]$ is input into the encoder as an input signal of the encoder. The encoder learns the input transmission feature $X$ to obtain latent code. A learning process of the encoder is that the encoder performs dimension reduction encoding on the transmission feature $X$ to obtain an encoding feature $Z$. The encoding feature $Z$ is input into the decoder as an input signal of the decoder. The decoder reconstructs the input encoding feature $Z$ as much as possible to form a transmission feature $X$. Optionally, the decoder performs dimension raising decoding on the encoding feature $Z$, and outputs a transmission feature

$$X' = \left[ x_1', x_2' ..., x_n' \right]$$ . The transmission feature $X'$ is a transmission feature $X$ restored by the decoder. $x_n$ is an $n$th feature included in the transmission feature $X$, for example, a total quantity of data flows. $n$ is total dimensions of the transmission feature $X$ or a total quantity of features in the transmission feature. n > 1. $x_n'$ is reconstructed $x_n$.

In a process of training the initial model, a quantity $q$ of training times, a target loss function, and a preset threshold are preset. The target loss function is used to calculate a difference between an input transmission feature and an output transmission feature of the model. In an $i$th training process, the first analyzer inputs a plurality of transmission features into an $i$th model, and the $i$th model reconstructs each input transmission feature, and outputs a reconstructed transmission feature of each transmission feature. The first analyzer inputs the plurality of input transmission features and the corresponding reconstructed transmission features into the target loss function, and calculates a target loss function value. If the target loss function value is greater than or equal to the preset threshold, and i < $q$, the first analyzer continues to perform iteration based on an optimization algorithm to update a model parameter of the $i$th model and obtain an $i + 1$th model, and the first analyzer enters an $i + 1$th training process. If the target loss function value is less than the preset threshold, the first analyzer ends training, and determines the $i$th model as the authentication model. If the target loss function value is greater than or equal to a preset difference, and $i \geq q$, the first analyzer ends the training, to avoid that the first analyzer continuously performs iterative training in a case in which no authentication model is trained; or if a change of a model parameter of the model between two adjacent iterations is less than a preset model parameter change value, the first analyzer ends the training.

$q \geq i \geq 1$. When $i = 1$, the $i$th model is the initial model. When $i > 1$, the $i$th model is an $i - 1$th model obtained through parameter updating in an $i - 1$th training process. The optimization algorithm includes a gradient descent algorithm. The target loss function is shown in Formula (1) below. $m$ is a total quantity of the plurality of transmission features, $x_i^j$ is a value of an $i$th dimension in a $j$th transmission feature, $x_i'^j$ is $x_i^j$ reconstructed by a target model, $n \geq i > 0$, and $m \geq j > 0$.

$$\mathrm{F}(\mathrm{X}, \mathrm{X}') = \frac{1}{\mathrm{nm}} \sum\nolimits_{\mathrm{j}}^{\mathrm{m}} \sum\nolimits_{\mathrm{i}}^{\mathrm{n}} (\mathrm{x}_{\mathrm{i}}^{\mathrm{j}} - \mathrm{x}_{\mathrm{i}}'^{\mathrm{j}})^2 \tag{1}$$

Optionally, in a training process, each time training is performed, the first analyzer can further display training progress information, where the training progress information includes a current quantity of training times and the target loss function value, so that the user can learn of a training progress based on the training progress information.

Step 204: The second analyzer receives the first authentication model sent by the first analyzer.

Step 205: The second analyzer performs authentication on the first terminal based on the transmission feature of the first terminal device and the first authentication model.

The second analyzer performs authentication on the first terminal based on the transmission feature of the first terminal and the first authentication model. For example, the first terminal may be the terminal device 101, the first network device may be the network device 111, the second analyzer may be the analyzer 141, and the first analyzer may be the analyzer 143. The terminal device 101 may be a camera. The analyzer 141 receives transmission features that are of the terminal device 101 in one time window and that are sent by the network device 111 and the camera authentication model sent by the analyzer 143, and performs authentication on the terminal device 101 based on the transmission features and the camera authentication model. When the analyzer 143 trains the authentication model based on transmission features of all terminal devices corresponding to the camera, the first authentication model is applicable to all sites. When the analyzer 143 trains different camera authentication models for different sites, the analyzer 143 sends the different camera authentication models to other analyzers. For example, the analyzer 143 sends the first authentication model to the analyzer 141, where the first authentication model is applicable only to the site 1. The analyzer 143 sends the second authentication model to the analyzer 142, where the second authentication model is applicable only to the site 2. For example, a third analyzer (for example, the analyzer 142) receives transmission features that are of the second terminal device (for example, the terminal device 104) and that are sent by the second network device (for example, the network device 113) and the second authentication model sent by the analyzer 143, and performs authentication on the terminal device 104 based on the transmission features and the second authentication model. The following describes the authentication process by using an example in which the analyzer 141 performs authentication on the terminal device 101.

If the analyzer 143 trains the first authentication model based on the second-type transmission feature, the analyzer 141 also performs authentication on the terminal device 101 based on the second-type transmission feature. When the transmission features that are of the terminal device 101 and that are received by the analyzer 141 are first-type transmission features, the analyzer 141 may aggregate the first-type transmission features to obtain a second-type transmission feature. If the analyzer 143 trains the first authentication model based on the first-type transmission feature, the analyzer 141 also performs authentication on the terminal device 101 based on the first-type transmission feature.

The analyzer 141 inputs the transmission feature of the terminal device 101 into the first authentication model to obtain a reconstructed transmission feature. When a difference degree of the reconstructed transmission feature and the input transmission feature is less than a target difference degree, the terminal device 101 is authenticated. Otherwise, the terminal device 101 fails to be authenticated. The difference degree of the reconstructed transmission feature and the input transmission feature is a mean square error between the reconstructed transmission feature and the input transmission feature.

When the terminal device 101 is authenticated, the terminal device 101 may continue to access a network. When the terminal device 101 fails to be authenticated, the analyzer 141 indicates the network device 111 or the network device 121 to execute a policy to restrict access of the terminal device 101 to the network. The policy may be disconnection. The policy may alternatively be restricting a rate or a service at which the terminal device 101 accesses the network. The policy may be determined by the analyzer 143, the analyzer 141, or the network device (for example, the network device 111 or the network device 121). When the policy is determined by the analyzer 143, the analyzer 141 sends the transmission feature of the terminal device 101 to the analyzer 143 to request the analyzer 143 to determine the policy. After determining the policy based on the transmission feature of the terminal device 101, the analyzer 143 sends the policy to the analyzer 141, and the analyzer 141 sends the policy to the network device to indicate the network device to execute the policy. When the policy is determined by the analyzer 141, the analyzer 141 determines the policy based on the transmission feature of the terminal device 101, and sends the policy to the network device to indicate the network device to execute the policy. When the policy is determined by the network device (for example, the network device 111), the analyzer 141 sends a message to notify the network device 111 that the terminal device 101 fails to be authenticated. The network device 111 determines the policy based on the transmission feature of the terminal device 101, and executes the policy. Alternatively, after receiving the indication message of the analyzer 141, the network device 111 may not determine the policy but directly execute a default policy, for example, disconnecting the terminal device 101 from the network.

The analyzer 143 or the analyzer 141 may identify, by using a neural network model interpretation library, a dimension feature with a large deviation degree in the transmission feature of the terminal device 101, and output the dimension feature as an abnormal reason and determine a policy. The analyzer 143, the analyzer 141, and the network device may alternatively determine, based on distribution of dimension features in a historical training set, a dimension feature with a large deviation degree in the transmission feature of the terminal device 101, and output the dimension feature as an abnormal reason and determine a policy. For example, if packet sizes as a dimension feature in historical samples are concentrated in an interval [0, 50], but a packet size in the transmission feature of the terminal device 101 is 10000, the packet size as a dimension feature in the transmission feature of the terminal device 101 is a dimension feature with a large deviation degree. The reason why the terminal device fails to be authenticated is that the packet size is abnormal. Specifically, the analyzer 141, the analyzer 143, and the network device may determine whether a dimension feature is a feature with a large deviation degree by using a 3sigma principle, a box ploT, or a quantile. For example, the analyzer 141 calculates a mean value and a standard deviation of each dimension feature in the historical samples. When a value of a dimension feature of a to-be-authenticated terminal device is greater than a sum of a mean value and three times a standard deviation of the dimension feature in the historical samples, or less than a difference between a mean value and three times a standard deviation of the dimension feature in the historical samples, the analyzer 141 determines that the dimension feature is a feature with a large deviation degree. For another example, the analyzer 141 calculates cumulative probability distribution of each dimension feature in the historical samples. When a value of a dimension feature of a to-be-authenticated terminal device is greater than a feature value of a quantile 95 in the cumulative probability distribution, the analyzer 141 determines that the dimension feature is a feature with a large deviation degree. For another example, the analyzer 141 may alternatively preset a threshold for each dimension feature. When a dimension feature in a transmission feature of a to-be-authenticated terminal device exceeds the threshold, the analyzer 141 determines that the dimension feature is a feature with a large deviation degree.

The analyzer 141, the analyzer 143, or the network device may determine a policy based on the feature with a large deviation degree, to restrict access, to the network, of a terminal device that fails to be authenticated. For example, if the feature with a large deviation degree is a packet size, the policy may be restricting a rate at which the terminal device accesses the network. For another example, if the feature with a large deviation degree is a quantity of SYN packets, the terminal device may be attacked by an attacker and initiate a SYN attack, and the policy may be disconnecting the terminal device from the network.

According to the device authentication method provided in this embodiment of this application, the second analyzer performs authentication on the terminal device based on the transmission feature that is of the terminal device and that is sent by the network device and based on the authentication model sent by the first analyzer. This implements authentication of the terminal device. In addition, the first analyzer is responsible for training the authentication model. This reduces a requirement on a computing capability of the second analyzer. In addition, the second analyzer performs authentication on the terminal device at the site at which the second analyzer is located, so that the transmission feature of the terminal device does not need to be sent to the outside of the site. This reduces a delay of device authentication and network resource consumption caused by device authentication, and improves timeliness of device authentication. In addition, for a same device type, the first analyzer may train different authentication models for different sites. This improves precision of device authentication.

In the embodiment shown in FIG. 2, the second analyzer inputs the transmission feature of the first terminal device into the authentication model to obtain the reconstructed transmission feature, and calculates the difference degree of the input transmission feature and the reconstructed transmission feature. When the difference degree is less than a target difference degree, the second analyzer determines that the first terminal device is authenticated, that is, the first terminal device is determined as a normal terminal device, and the input transmission feature is determined as a normal transmission feature. When the difference degree is greater than or equal to a target difference degree, the second analyzer determines that the first terminal device fails to be authenticated, that is, the first terminal device is determined as an abnormal terminal device, and the input transmission feature is determined as an abnormal transmission feature. It may be learned that a value of the target difference degree affects the authentication result. Therefore, when the first analyzer trains the authentication model in step 203, an authentication step may be further added, to obtain an appropriate target difference degree and improve accuracy of the authentication model.

Accuracy of the authentication model includes a precision rate and a recall rate. The precision rate may include a normal precision rate and an abnormal precision rate. The recall rate may include a normal recall rate and an abnormal recall rate. The normal precision rate indicates a proportion of real normal transmission features in normal transmission features determined by the authentication model. The abnormal precision rate indicates a proportion of real abnormal transmission features in abnormal transmission features determined by the authentication model. The normal recall rate indicates a probability that an input normal transmission feature is determined as a normal transmission feature by the authentication model in an authentication process. The abnormal recall rate indicates a probability that an input abnormal transmission feature is determined as an abnormal transmission feature by the authentication model in an authentication process. For example, the first analyzer inputs 1000 transmission features into the authentication model to verify accuracy of the authentication model. 900 of the 1000 transmission features are real normal transmission features, that is, the 900 transmission features are transmission features of normal terminal devices. The other 100 transmission features are real abnormal transmission features, that is, the 100 transmission features are transmission features of abnormal terminal devices. The authentication model outputs 1000 corresponding reconstructed transmission features for the 1000 transmission features. A difference degree of 850 reconstructed transmission features and corresponding input transmission features is less than a target difference degree, that is, the authentication model determines that the input transmission features corresponding to the 850 reconstructed transmission features are normal transmission features. A difference degree of 150 reconstructed transmission features and corresponding input transmission features is greater than the target difference degree, that is, the authentication model determines that the input transmission features corresponding to the 150 reconstructed transmission features are abnormal transmission features. However, only 820 of the input transmission features corresponding to the 850 reconstructed transmission features are real normal transmission features, that is, the authentication model incorrectly determines 30 real abnormal transmission features as normal transmission features. In addition, only 70 of the input transmission features corresponding to the 150 reconstructed transmission features are real abnormal transmission features, that is, the authentication model incorrectly determines 80 real normal transmission features as abnormal transmission features. Therefore, for the 1000 input transmission features, the normal precision rate of the authentication model is 820/850, the normal recall rate of the authentication model is 820/900, the abnormal precision rate of the authentication model is 70/150, and the abnormal recall rate of the authentication model is 70/100.

When the output obtained by the authentication model under the target difference degree meets a condition, the first analyzer sets the target difference degree to the target difference degree that meets a requirement. When subsequently performing authentication on the terminal device, the second analyzer compares the difference degree of the transmission feature of the terminal device and the reconstructed transmission feature with the target difference degree, to determine whether the terminal device is authenticated. When the output obtained by the authentication model under the target difference degree does not meet a condition, the first analyzer may update the target difference degree. The condition includes one or more of the following: The normal precision rate is greater than a normal precision rate threshold, the normal recall rate is greater than a normal recall rate threshold, the abnormal precision rate is greater than an abnormal precision rate threshold, and the abnormal recall rate is greater than an abnormal recall rate threshold. The first analyzer may preset the normal precision rate threshold, the abnormal precision rate threshold, the normal recall rate threshold, and the abnormal recall rate threshold.

The first analyzer may update the target difference degree according to the following process. The first analyzer may calculate a difference degree of each normal transmission feature and a corresponding reconstructed transmission feature. The difference degree may be a mean square error (mean square error, MSE) shown in Formula (2). X indicates a normal transmission feature, **X'** indicates a corresponding reconstructed transmission feature, *MSE(X,X')* indicates a mean square error between the normal transmission feature and the corresponding reconstructed transmission feature, n indicates a dimension of the normal transmission feature (for example, if the normal transmission feature includes four features: a quantity of data flows, a quantity of SYN packets, a packet interval mean value, and a packet interval standard deviation, n = 4), and $x_n$ indicates an i$^{th}$-dimension feature in the transmission feature.

$$MSE(X,X') = \frac{1}{n}\sum_{i=1}^{n}(x_i - x_i')^2 \qquad (2)$$

The first analyzer may obtain a target difference degree $\theta$ based on at least one difference degree. For example, the first analyzer calculates the target difference degree according to Formula (3). **MSE**[·] is an array formed by the at least one difference degree, **AVE**(**MSE**[·]) is a mean value of the at least one difference degree, **STD**(**MSE**[·]) is a standard deviation of the at least one difference degree, and indicates a fluctuation status of the at least one difference degree, and **K** is a sensitivity coefficient. The at least one difference degree may be each difference degree calculated according to Formula (2), or may be a difference degree selected by the first analyzer. For example, the first analyzer calculates a plurality of difference degrees of normal transmission features and corresponding reconstructed transmission features, and then selects, based on a quantile of difference degree distribution, difference degrees for calculating the target difference degree, for example, selects only difference degrees distributed in [0%,90%].

$$\theta = AVE(MSE[\cdot]) + K \times STD(MSE[\cdot]) \qquad (3)$$

When the output obtained by the authentication model under the target difference degree $\theta$ meets the condition, the first analyzer may determine that $\theta$ is the target difference degree that meets the requirement. Otherwise, the first analyzer may adjust K to obtain the target difference degree that meets the requirement. In addition, the first analyzer may adjust types of transmission features for training or a quantity of transmission features for training to retrain the authentication model, so that the output of the authentication model in the authentication phase can meet the condition.

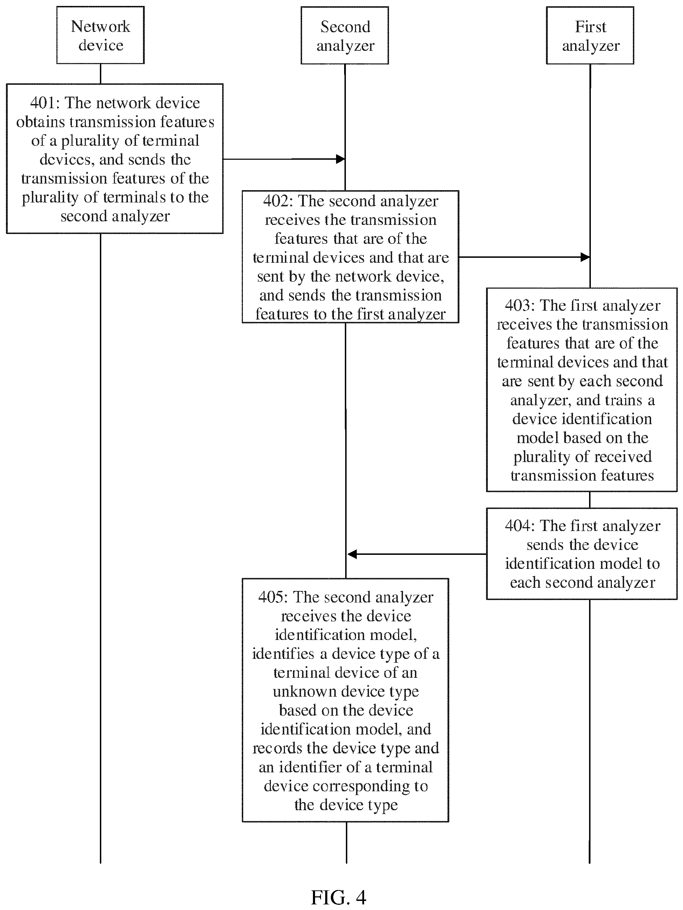

In the embodiment shown in FIG. 2, the administrator may enter a plurality of device types and identifiers of terminal devices corresponding to all the device types in the input interface of the first analyzer to form an asset library. The first analyzer may distinguish, based on the asset library, terminal devices corresponding to different device types, to train authentication models for different device types. The second analyzer may determine, based on the asset library, an identifier of a terminal device corresponding to a device type, to indicate the network device to collect a transmission feature of a terminal device associated with the identifier. The second analyzer may further determine a device type of a to-be-authenticated terminal device based on the asset library, to perform authentication on the terminal device based on an authentication model corresponding to the device type. The first analyzer may further train a device identification model based on the transmission features of the plurality of terminal devices, and send the device identification model to the second analyzer. The first analyzer or the second analyzer identifies device types of terminal devices based on the device identification model to obtain the asset library. The second analyzer may further identify a device type of a terminal device based on the device identification model, to select an authentication model corresponding to the device type to perform authentication on the terminal device. FIG. 4 is a flowchart of a device identification method according to an embodiment of this application. The device identification method includes the following steps.

Step 401: The network device obtains transmission features of a plurality of terminal devices, and sends the transmission features of the plurality of terminal devices to the second analyzer.

Different types of terminal devices have different transmission features. For example, the camera has almost no downlink data flow, but has a continuous and large uplink data flow. However, the ATM has an irregular and quite small data flow. The analyzer may distinguish different terminal devices based on transmission features of the terminal devices. Therefore, the transmission feature includes statistical information that can reflect a service feature of the terminal device. For example, the transmission feature includes one or more types of the following information: a quantity of data flows of the terminal device in a time window, a size of a data flow of the terminal device in the time window, a quantity of data packets of the terminal device in the time window, a size of each data packet of the terminal device in the time window, header information of each data flow of the terminal device in the time window, a traffic size of each data flow of the terminal device in the time window, a quantity of packets of each data flow of the terminal device in the time window, and a size of each packet of each data flow of the terminal device in the time window. The header information of the data flow includes a tuple of the data flow. The tuple of the data flow may be a 5-tuple of the data flow. The 5-tuple of the data flow includes a source IP address, a destination IP address, a source port, a destination port, and a protocol type of the data flow. The transmission feature may further include direction information of the data flow, for example, uplink or downlink. A data flow received by the network device from the port on the terminal device side is an uplink data flow, and a data flow in an opposite direction is a downlink data flow.

One transmission feature of one terminal device includes the foregoing one or more types of information represented by the data flow of the terminal device in the time window. A plurality of transmission features of one terminal device correspond to the foregoing one or more types of information represented by the data flow of the terminal device in a plurality of time windows. The network device obtains one or more transmission features of the plurality of terminal devices. The network device may be an access device or an aggregation device of the terminal device. For example, the time window may be 5 minutes. The network device 111 in FIG. 1 may continuously collect, within one day, a data flow forwarded through the network device, to obtain transmission features in 288 (24 hours * 60 minutes/5 minutes = 288) time windows. A transmission feature of each time window may include a transmission feature of the terminal device 101 in the time window and a transmission feature of the terminal device 102 in the time window. The network device may distinguish data flows of different terminal devices in the time window based on identifiers of the terminal devices, to obtain transmission features of the different terminal devices. The identifier of the terminal device may be a network address of the terminal device, for example, an IP address or a MAC address of the terminal device. The network device may distinguish data flows of different terminal devices in one time window based on a source IP address of an uplink data flow or a destination IP address of a downlink data flow. Uplink data flows having a same source IP address or downlink data flows having a same destination IP address are data flows belonging to a same terminal device. The network device may obtain a plurality of transmission features based on a default configuration. For example, the network devices 111 to 114 shown in FIG. 1 separately obtain transmission features of the terminal devices 101 to 107 in each time window in one day. For another example, the network devices 111 to 113 separately obtain 1000 transmission features for the terminal devices 101 to 107. The network device may alternatively obtain a plurality of transmission features based on a specified requirement. For example, the administrator enters collection duration/a collection quantity and a time window size in the input interface of the first analyzer, and indicates, by using the second analyzer, each network device to obtain, based on the specified collection duration/quantity and the specified time window, transmission features of terminal devices associated with each network device. When the network device is an access device, the terminal device associated with the network device is a terminal device that accesses the network device. When the network device is an aggregation device, the terminal device associated with the network device is a terminal device whose packet is forwarded by the network device. For example, the terminal device associated with the network device 111 shown in FIG. 1 includes the terminal devices 101 and 102, and the terminal device associated with the network device 121 includes the terminal devices 101 to 103 and the terminal devices 106 and 107.

After obtaining the transmission features of the terminal devices, the network device sends the transmission features of the terminal devices to the second analyzer. For example, the network device 111 sends the transmission features of the terminal devices 101 and 102 to the analyzer 141, the network device 112 sends the transmission features of the terminal device 103 to the analyzer 141, the network device 114 sends the transmission features of the terminal devices 106 and 107 to the analyzer 141, and the network device 113 sends the transmission features of the terminal devices 104 and 105 to the analyzer 142. The network device may send the transmission features of the terminal devices in a plurality of manners. For example, the network device stores the transmission features, and when collection ends, the network device sends all the stored transmission features at a time. For another example, the network device periodically sends the transmission features. For example, the network device sends newly obtained transmission features every half an hour, or sends 10 newly obtained transmission features each time. For another example, each time when the network device obtains a new transmission feature, the network device immediately sends the new transmission feature.

The transmission feature of the terminal device may alternatively be obtained by another device. For example, a network probe attached to the network device side obtains the transmission feature of the terminal device. For example, the network probe may be attached to the network device 111 in FIG. 1, and the network probe has a computing capability. The network device 111 may mirror a data flow to the network probe, and the network probe calculates the transmission feature of each terminal device in the time window based on a mirror data flow.

Step 402: The second analyzer receives the transmission features sent by the network device, and sends the transmission features to the first analyzer.

Step 403: The first analyzer receives the transmission features that are of the terminal devices and that are sent by each second analyzer, and trains the device identification model based on the plurality of received transmission features.

The first analyzer may perform training based on transmission features that are of a plurality of terminal devices of unknown device types and of a plurality of terminal devices of known device types and that are sent by each second analyzer, to obtain the device identification model. The device identification model may be a plurality of machine learning models, for example, a random forest or a convolutional neural network. Initially, the device types of the plurality of terminal devices of known device types may be marked by the administrator. For example, the first analyzer receives transmission features of 1000 terminal devices, and the administrator randomly marks correct device types for 100 terminal devices. For another example, the administrator enters 100 IP addresses and device types associated with the 100 IP addresses in the input interface of the first analyzer, and transmission features that are associated with the 100 IP addresses and that are received by the first analyzer are transmission features of the terminal devices of known device types.

The administrator may alternatively enter an instruction in the input interface of the first analyzer to indicate the first analyzer to start training the device identification model. After receiving the input instruction of the administrator, the first analyzer may send a collection instruction to each network device through the second analyzer. The collection instruction indicates the network device to obtain the transmission feature of the terminal device, so that the first analyzer obtains the dataset for training the device identification model. The collection instruction may include information such as collection duration, a collection frequency, and a type of collected information. For example, the collection duration may be one day, the collection frequency may be 5 minutes, and the type of the collected information may be the one or more types of information included in the transmission feature in step 401. After receiving the collection instruction, the network device calculates the transmission features every 5 minutes within one day. The transmission feature in every 5 minutes includes a transmission feature of each terminal device that has a data flow within the 5 minutes. The network device may periodically obtain the transmission features. For example, the network device collects a data flow every 5 minutes and calculates the transmission features within the 5 minutes. The network device may alternatively obtain data flow statistical information in a plurality of time windows at a time. For example, the network device stores data flow files within one day, and then obtains transmission features in 288 (24 hours * 60/5 minutes = 288) every 5 minutes on this day at a time.

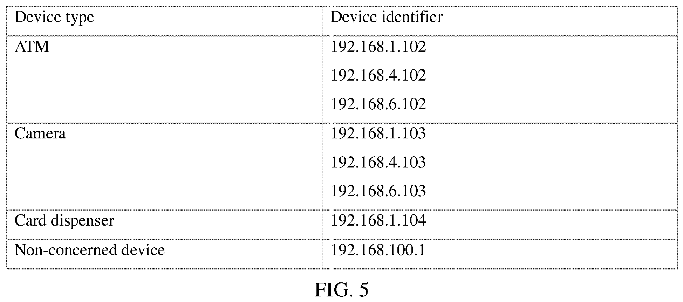

After obtaining the device identification model, the first analyzer may identify device types of the plurality of terminal devices based on the transmission features of the plurality of terminal devices and the device identification model. The analyzer adds the identifiers of the plurality of terminal devices and the device types of the plurality of terminals to the asset library. The asset library includes at least one asset information entry. Each asset information entry includes a device type and an identifier of one or more terminal devices corresponding to the device type. For example, the asset library may be shown in FIG. 5. The asset library shown in FIG. 5 records a plurality of asset information entries. Each asset information entry includes a device type and an identifier of one or more terminal devices corresponding to the device type. The identifier of the device includes an IP address of the terminal device. For example, as shown in FIG. 5, the ATM includes terminal devices associated with IP addresses 192.168.1.102, 192.168.4.102, and 192.168.6.102, the camera includes terminal devices associated with IP addresses 192.168.1.103, 192.168.4.103, and 192.168.6.103, and the card dispenser includes terminal devices associated with an IP address 192.168.1.104. The asset library can also record an identifier of a non-concerned device. For example, the analyzer may mark a terminal device having a strong protection capability, for example, a personal computer (personal computer, PC), as a non-concerned device, and the analyzer or another management device does not need to set a special protection policy for these non-concerned devices.

Step 404: The first analyzer sends the device identification model to each second analyzer.

After obtaining the device identification model, the first analyzer sends the device identification model to each second analyzer. For example, after the analyzer 143 shown in FIG. 1 obtains the device identification model based on the transmission features that are of the plurality of terminal devices and that are sent by the analyzer 141 and the analyzer 142, the analyzer 143 sends the device identification model to the analyzer 141 and the analyzer 142.

The first analyzer may also send the asset information entry included in the asset library to each second analyzer. For example, when training of the device identification model is completed, the first analyzer may identify device types of a large quantity of terminal devices based on the device identification model to generate the asset library, and the first analyzer may send an identifier of one or more terminal devices corresponding to each device type in the asset library to the second analyzer.

Step 405: The second analyzer receives the device identification model, identifies a device type of a terminal device of an unknown device type based on the device identification model, and records the device type and an identifier of a terminal device corresponding to the device type.

The second analyzer receives the device identification model sent by the first analyzer, and identifies the device type of the terminal device of the unknown device type based on the device identification model. For example, if the first analyzer does not send the asset information entry to the second analyzer, the second analyzer may identify the device type of the terminal device based on the transmission feature of the terminal device and the device identification model. For another example, when there is a newly connected terminal device, the second analyzer may identify a device type of the newly connected terminal device based on a transmission feature of the newly connected terminal device and the device identification model. The network device may determine whether there is a newly connected terminal device, to collect and send the transmission feature of the newly connected terminal device to the second analyzer and to prompt the second analyzer to identify the device type of the newly connected terminal device. For example, after detecting that a disconnected port is connected, the network device 111 determines that the port is connected to the newly connected terminal device. For another example, when no data flow of the terminal device 104 is detected within preset duration and the data flow of the terminal device is detected again, the network device 113 may determine that the terminal device is a newly connected terminal device. That is, the network device may determine, based on a size of historical traffic of the terminal device, whether the terminal device is a newly connected terminal device. If the size of historical traffic of the terminal device is 0, (for example, the network device detects no traffic of the terminal device within the preset duration), when the network device detects traffic of the terminal device again, the network device determines that the terminal device is a newly connected terminal device. The preset duration may be a multiple of the time window. For example, if the time window is 5 minutes, the preset duration may be 15 minutes. Alternatively, the preset duration may not be a multiple of the time window. For example, the preset duration may be 12 minutes.

When receiving the device type and the identifier of the one or more terminal devices corresponding to the device type that are sent by the first analyzer, or the second analyzer identifies the device type of the terminal device, the second analyzer may add the received or identified device type and the identifier of the one or more terminal devices corresponding to the device type to the asset library of the second analyzer. After the second analyzer identifies the device type of the new terminal device, the second analyzer may update the asset library of the second analyzer. The second analyzer may further send the identifier and the device type of the new terminal device to the first analyzer, to prompt the first analyzer to update the asset library of the first analyzer. During training of the device authentication model, the first analyzer may query the asset library of the first analyzer to obtain an identifier of a terminal device corresponding to a specific device type, and indicate, by using the second analyzer, the network device to collect transmission features of the terminal device corresponding to the specific device type, to train a device authentication model for the specific device type. When performing device authentication, the second analyzer obtains a device type of a to-be-authenticated terminal device, and obtains an authentication model based on the device type to perform authentication on the to-be-authenticated terminal device. The second analyzer may query the asset library of the second analyzer based on an identifier of the to-be-authenticated terminal device, to obtain the device type of the to-be-authenticated terminal device. The second analyzer obtains, based on the device type, the device authentication model corresponding to the device type, to perform authentication on the to-be-authenticated terminal device. For example, if a terminal device is a camera, the second analyzer obtains a camera authentication model to perform authentication on the terminal device. For another example, if the another terminal device is an ATM, the second analyzer obtains an ATM authentication model to perform authentication on the terminal device. The second analyzer may query locally stored authentication models by using a device type as an identifier, to obtain a device authentication model corresponding to the device type. When the second analyzer does not store the device authentication model corresponding to the device type, the second analyzer may request the first analyzer to send the device authentication model. The second analyzer and/or the first analyzer may store a plurality of device types and an authentication model corresponding to each device type. The second analyzer and/or the first analyzer may also store information of a site to which each authentication model is applicable, to distinguish different authentication models of a same device type.

According to the device identification method provided in this embodiment of this application, the first analyzer trains the device identification model based on the transmission features that are of the plurality of terminal devices and that are collected by the network device and sent by the second analyzer, and the first analyzer or the second analyzer identifies the device type of the terminal device based on the device identification model, so that the second analyzer can obtain the device type of the to-be-authenticated device without depending on the input of the administrator anymore. This increases flexibility of device authentication.

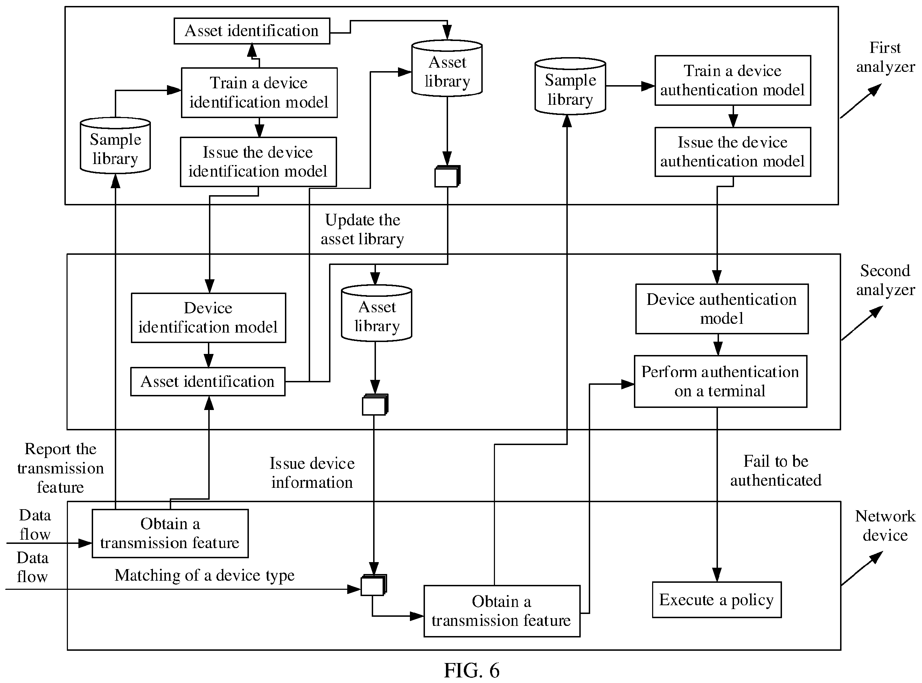

To further describe the processes shown in FIG. 2 and FIG. 4, FIG. 6 shows a schematic diagram of a device authentication method according to an embodiment of this application. When receiving the data flow transmitted by the terminal, the network device obtains the transmission feature of the terminal device based on the packet in the data flow, and sends the transmission features of the plurality of terminals to the first analyzer by using the second analyzer, to form a sample library for training the device identification model. The first analyzer performs training based on the sample library for training the device identification model to obtain the device identification model, determines the device type of the terminal device in the sample library based on the model, to form the asset library of the first analyzer, and sends the device identification model and the asset library to the second analyzer. The second analyzer determines the device type of the terminal of the unknown device type based on the transmission feature of the terminal of the unknown device type and the device identification model, and updates the asset library of the second analyzer and the asset library of the first analyzer. The first analyzer indicates, by using the second analyzer, the network device to obtain the transmission feature of the terminal device of the specific device type, to form the sample library for training the device authentication model. The first analyzer trains the device authentication model based on the sample library, and sends the device authentication model to the second analyzer. The second analyzer performs authentication on the terminal based on the device authentication model and the transmission feature of the terminal device. When the terminal device fails to be authenticated, the second analyzer indicates the network device to execute the policy to restrict the terminal device. The policy may be determined by the second analyzer, the first analyzer, or the network device.

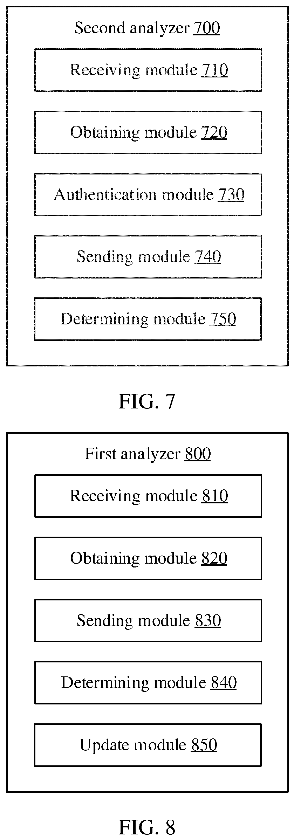

FIG. 7 is a schematic diagram of a logical structure of a second analyzer according to an embodiment of this application. As shown in FIG. 7, the second analyzer 700 includes a receiving module 710, an obtaining module 720, and an authentication module 730. The receiving module 710 is configured to perform step 204 in the embodiment shown in FIG. 2. The obtaining module 720 is configured to perform step 202 in the embodiment shown in FIG. 2. The authentication module 730 is configured to perform step 205 in the embodiment shown in FIG. 2.

The receiving module 710 is configured to receive a first authentication model sent by a first analyzer. The first authentication model is a device authentication model corresponding to a device type of a first terminal device.

The obtaining module 720 is configured to obtain a transmission feature of the first terminal device. The obtaining module 720 may directly receive the transmission feature that is of the first terminal device and that is sent by the first network device, to obtain the transmission feature of the first terminal. The obtaining module 720 may further receive a data flow that is of the first terminal device and that is sent by the first network device, and perform calculation based on the data flow of the first terminal to obtain the transmission feature of the first terminal device. The first network device is an access device or an aggregation device of the first terminal device.

The authentication module 730 is configured to perform authentication on the first terminal device based on the transmission feature of the first terminal device and the first authentication model. The authentication module 730 may input the transmission feature of the first terminal device into the first authentication model to obtain a reconstructed transmission feature. When a difference degree of the reconstructed transmission feature and the transmission feature of the first terminal device is less than a target difference degree, the first terminal device is authenticated.

Optionally, the second analyzer 700 further includes a sending module 740. The sending module 740 is configured to: when the first terminal device fails to be authenticated, send a message to the first network device, to indicate the first network device to execute a policy to restrict the first terminal device.

Optionally, the second analyzer 700 further includes a determining module 750. The determining module 750 is configured to determine the policy based on the transmission feature of the first terminal device. The message includes the policy.

Optionally, the sending module 740 is configured to: when the first terminal device fails to be authenticated, send the transmission feature of the first terminal device to the first analyzer. The receiving module 710 is further configured to receive the policy. The policy is determined by the first analyzer based on the transmission feature of the first terminal device. The message includes the policy.

Optionally, the sending module 740 is configured to: when the first terminal fails to be authenticated, send a message to the first network device, to urge the first network device to determine the policy and execute the policy. The message indicates that the first terminal fails to be authenticated.

Optionally, the receiving module 710 is further configured to receive a target device type sent by the first analyzer. The determining module 750 is further configured to determine, based on an asset library, a plurality of terminal devices corresponding to the target device type. The sending module 740 is further configured to send transmission features of the plurality of terminal devices corresponding to the target device type to the first analyzer, to enable the first analyzer to obtain the first authentication model. The asset library is used to record a device type and an identifier of one or more terminal devices corresponding to the device type.

Optionally, the receiving module 710 and the sending module 740 are further configured to perform step 403 in the embodiment shown in FIG. 4. The receiving module 710 is further configured to receive the transmission features that are of the plurality of terminal devices and that are sent by the network device. The sending module 740 is further configured to send the transmission features of the plurality of terminal devices to the first analyzer, to enable the first analyzer to obtain a device identification model.

Optionally, the receiving module 710 and the obtaining module 720 are further configured to perform step 405 in the embodiment shown in FIG. 4. The receiving module 710 is further configured to receive the device identification model sent by the first analyzer. The obtaining module 720 is further configured to obtain the transmission features of the plurality of terminal devices, and obtain device types of the plurality of terminals based on the transmission features of the plurality of terminal devices and the device identification model, to update the asset library.

FIG. 8 is a schematic diagram of a logical structure of a first analyzer according to an embodiment of this application. As shown in FIG. 8, the first analyzer 800 includes a receiving module 810, an obtaining module 820, and a sending module 830. The sending module 830 is configured to perform step 203 in the embodiment shown in FIG. 2. The obtaining module 820 is configured to perform the substep of obtaining the authentication model in step 203 in the embodiment shown in FIG. 2. The receiving module 810 is configured to receive transmission features that are of terminal device and that are sent by each second analyzer. The transmission features are used as an input of the obtaining module 820.

The receiving module 810 is configured to receive transmission features that are of a plurality of first-type terminal devices and that are sent by the second analyzer.

The obtaining module 820 is configured to obtain a first authentication model based on the transmission features of the plurality of first-type terminal devices.

The sending module 830 is configured to send the first authentication model to the second analyzer.

Optionally, the receiving module 810 is further configured to receive transmission features that are of a plurality of second-type terminal devices and that are sent by a third analyzer. A device type of the second-type terminal device is the same as a device type of the first-type terminal. Optionally, the obtaining module 820 is further configured to obtain a second authentication model based on the transmission features of the plurality of second-type terminals. The sending module 830 is further configured to send the second authentication model to the third analyzer. The third analyzer is another second analyzer.

Optionally, the obtaining module 820 is further configured to obtain a third authentication model based on the transmission features of the plurality of first-type terminal devices and the transmission features of the plurality of second-type terminal devices. The sending module 830 is further configured to send the third authentication model to the second analyzer and the third analyzer.

Optionally, the first analyzer further includes a determining module 840. Optionally, the receiving module 810 is further configured to receive a transmission feature that is of a first terminal device and that is sent by the second analyzer. The determining module 840 is configured to determine a first policy based on the transmission feature of the first terminal device. The sending module 830 is further configured to send the first policy to the second analyzer. Optionally, the receiving module 810 is further configured to receive a transmission feature that is of a second terminal device and that is sent by the third analyzer. The determining module 840 is configured to determine a second policy based on the transmission feature of the second terminal device. The sending module 730 is further configured to send the second policy to the third analyzer. The first terminal device and the second terminal device are terminals that fail to be authenticated.

Optionally, the sending module 830 is further configured to send a target device type to the second analyzer, to indicate the second analyzer to obtain the transmission features of the plurality of first-type terminal devices. The plurality of first-type terminal devices are terminals corresponding to the target device type.

Optionally, the sending module 830 is further configured to send the target device type to the third analyzer, to indicate the third analyzer to obtain the transmission features of the plurality of second-type terminal devices. The plurality of second-type terminal devices are terminals corresponding to the target device type.

Optionally, the receiving module 810 is further configured to receive transmission features that are of a plurality of terminal devices and that are sent by the second analyzer and/or the third analyzer. The obtaining module 820 is further configured to obtain a device identification model based on the transmission features of the plurality of terminal devices. The sending module 830 is further configured to send the device identification model to the second analyzer and/or the third analyzer.

Optionally, the obtaining module 820 is further configured to determine device types of the plurality of terminal devices based on the device identification model, to obtain an asset library. The asset library is used to record a device type and an identifier of one or more terminal devices corresponding to the device type. The asset library includes one or more asset information entries. Each asset information entry includes a device type and an identifier of one or more terminal devices corresponding to the device type. The sending module 830 is further configured to send the device type and the identifier of the one or more terminal devices corresponding to the device type in the asset library to the second analyzer and the third analyzer.

Optionally, the receiving module 810 is further configured to receive the device type and the identifier of the terminal device corresponding to the device type that are sent by the second analyzer and/or the third analyzer. Optionally, the first analyzer 800 further includes an update module 850. The update module 850 is configured to update the asset library based on the device type and the identifier of the terminal device corresponding to the device type that are sent by the second analyzer and/or the third analyzer. The terminal device corresponding to the device type is a new terminal device identified by the second analyzer or the third analyzer based on the device identification model.

It should be noted that, when the second analyzer provided in the embodiment shown in FIG. 7 and the first analyzer provided in the embodiment shown in FIG. 8 perform the device authentication method, division of the foregoing functional modules is merely used as an example for description. During actual application, the foregoing functions may be allocated to different functional modules for implementation based on a requirement, that is, an internal structure of the device is divided into different functional modules to implement all or some of the functions described above. In addition, the second analyzer and the first analyzer provided in the foregoing embodiments belong to a same concept as the device authentication method embodiment and the device identification method embodiment. For specific implementation processes thereof, refer to the method embodiments. Details are not described herein again.

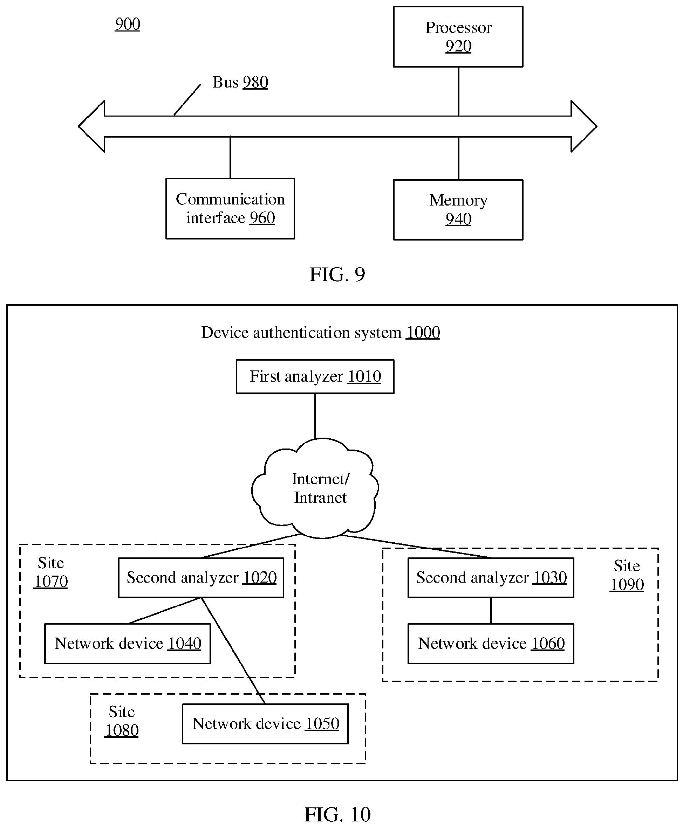

FIG. 9 is a schematic diagram of a hardware structure of an electronic device according to an embodiment of this application. The electronic device may be a first analyzer or a second analyzer. As shown in FIG. 9, the electronic device 900 includes a processor 920, a memory 940, a communication interface 960, and a bus 980. The processor 920, the memory 940, and the communication interface 960 are connected to each other through the bus 980. The processor 920, the memory 940, and the communication interface 960 may alternatively be connected in another connection manner other than the bus 980.

The memory 940 may be various types of storage media, for example, a random access memory (random access memory, RAM), a read-only memory (read-only memory, ROM), a non-volatile RAM (non-volatile RAM, NVRAM), a programmable ROM (programmable ROM, PROM), an erasable PROM (erasable PROM, EPROM), an electrically erasable PROM (electrically erasable PROM, EEPROM), a flash memory, an optical memory, a hard disk, or the like.

The processor 920 may be a general-purpose processor. The general-purpose processor may be a processor that reads and executes content stored in a memory (for example, the memory 940) to perform a specific step and/or operation. For example, the general-purpose processor may be a central processing unit (central processing unit, CPU). The processor 920 may include at least one circuit, to perform all or some of the steps of the device authentication method provided in the embodiment shown in FIG. 2 or the device identification method provided in the embodiment shown in FIG. 4.

The communication interface 960 includes an interface for implementing interconnection between components inside the electronic device 900 and an interface for implementing interconnection between the electronic device 900 and another device (for example, a network device or another analyzer), for example, an input/output (input/output, I/O) interface, a physical interface, a logical interface, or the like. The physical interface may be an Ethernet interface, an optical interface, an ATM interface, or the like.

The bus 980 may be any type of communication bus for implementing interconnection between the processor 920, the memory 940, and the communication interface 960, for example, a system bus.

The foregoing components may be separately disposed on chips that are independent of each other, or at least some or all of the components may be disposed on a same chip. Whether the components are independently disposed on different chips or are integrated on one or more chips usually depends on a requirement of a product design. Embodiments of this application impose no limitation on specific implementations of the foregoing components.

The electronic device 900 shown in FIG. 9 is merely an example. In an implementation process, the electronic device 900 may further include other components that are not listed one by one in this specification. In addition, the electronic device 900 provided in the foregoing embodiment belongs to a same concept as the embodiment shown in FIG. 2 and the embodiment shown in FIG. 4. For a specific implementation process of the electronic device 900, refer to the method embodiments. Details are not described herein again.

FIG. 10 is a schematic diagram of a device authentication system according to an embodiment of this application. As shown in FIG. 10, the device authentication system 1000 includes a first analyzer 1010, one or more second analyzers, and a network device associated with the one or more second analyzers. For example, the one or more second analyzers include a second analyzer 1020 and/or a second analyzer 1030. The second analyzer 1020 is associated with a network device 1040 and a network device 1050. The second analyzer 1030 is associated with a network device 1060. The network device includes an access device connected to a terminal device or an aggregation device through which a data flow of a terminal device necessarily flows. The first analyzer and the second analyzer are connected through the Internet or an intranet. The second analyzer and the network device associated with the second analyzer are at a same site, or a site at which the network device associated with the second analyzer is located is a subsite of a site at which the second analyzer is located. For example, the first analyzer 1010, the second analyzer 1020, and the second analyzer 1030 are connected to each other through the Internet/intranet. The second analyzer 1020 and the network device 1040 are at a site 1070. The network device 1050 is at a subsite 1080 of the site 1070. The second analyzer 1030 and the network device 1060 are at a site 1090. The first analyzer 1010 is configured to perform step 203 in the device authentication method embodiment shown in FIG. 2 and step 403 and step 404 in the device identification method embodiment shown in FIG. 4. The second analyzer 1020 and the second analyzer 1030 are configured to perform step 202, step 204, and step 205 in the device authentication method embodiment shown in FIG. 2 and step 402 and step 405 in the device identification method embodiment shown in FIG. 4. The network devices 1040 to 1060 are configured to perform step 201 in the device authentication method embodiment shown in FIG. 2 and step 401 in the device identification method embodiment shown in FIG. 4. In a possible implementation, the first analyzer 1010 includes the first analyzer 800 shown in FIG. 8. The second analyzer 1020 or the second analyzer 1030 includes the second analyzer 700 shown in FIG. 7. In another possible implementation, the first analyzer 1010, the second analyzer 1020, or the second analyzer 1030 includes the electronic device 900 shown in FIG. 9.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedures or functions according to the embodiments of the present invention are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, DVD), a semiconductor medium (for example, a solid state disk (solid state disk, SSD)), or the like.

It should be understood that sequence numbers of the foregoing processes do not mean execution sequences in embodiments of this application. The execution sequences of the processes should be determined based on functions and internal logic of the processes, and should not be construed as any limitation on the implementation processes of embodiments of this application.

Objectives, technical solutions, and beneficial effects of the present invention are further described in detail in the foregoing specific implementations. It should be understood that the foregoing descriptions are merely specific implementations of the present invention, and are not intended to limit the protection scope of the present invention. Any modification, equivalent replacement, improvement, or the like made based on the technical solutions of the present invention shall fall within the protection scope of the present invention.

**Claims**

1. A device authentication method, wherein the method is applied to a first analyzer (143), and the method comprises:

   receiving (201) first-type transmission features that are of a plurality of first-type terminal devices and that are sent by a second analyzer (141);
   obtaining a first authentication model based on the first-type transmission features of the plurality of first-type terminal devices; and
   sending (203) the first authentication model to the second analyzer (141).

2. The method according to claim 1, wherein the method further comprises:

   receiving first-type transmission features that are of a plurality of second-type terminal devices and that are sent by a third analyzer (142), wherein a device type of the second-type terminal device is the same as a device type of the first-type terminal device;
   obtaining a second authentication model based on the first-type transmission features of the plurality of second-type terminal devices; and
   sending the second authentication model to the third analyzer (142).

3. The method according to claim 1, further comprising:

   receiving a first-type transmission feature that is of a first terminal device (101, 102) and that is sent by the second analyzer (141), determining a first policy based on the first-type transmission feature of the first terminal device (101, 102), and sending the first policy to the second analyzer (141); and/or
   receiving a first-type transmission feature that is of a second terminal device (104) and that is sent by a third analyzer (142), determining a second policy based on the first-type transmission feature of the second terminal device (104), and sending the second policy to the third analyzer (142), wherein
   the first terminal device (101, 102) and the second terminal device (104) are terminals that fail to be authenticated.

4. The method according to claim 1, further comprising:
   sending a target device type to the second analyzer (141), to indicate the second analyzer (141) to obtain the first-type transmission features of the plurality of first-type terminal devices, wherein the plurality of first-type terminal devices are terminals corresponding to the target device type.

5. The method according to any one of claims 1 to 4, further comprising:

   receiving second-type transmission features that are of a plurality of terminal devices and that are sent by the second analyzer (141) and/or the third analyzer (142); and
   obtaining a device identification model based on the second-type transmission features of the plurality of terminal devices, and sending the device identification model to the second analyzer (141) and/or the third analyzer (142).

6. The method according to claim 5, further comprising:
   obtaining device types of the plurality of terminal devices based on the second-type transmission features of the plurality of terminal devices and the device identification model, to obtain an asset library, wherein the asset library comprises at least one asset information entry, and each of the at least one asset information entry comprises a device type and an identifier of one or more terminal devices corresponding to the device type.

7. The method according to claim 6, further comprising:
   receiving identifiers and device types that are of terminal devices and that are sent by the second analyzer (141) and/or the third analyzer (142), to update the asset library.

8. A device authentication method, wherein the method is applied to a second analyzer (141) and comprises:

   receiving (204) a first authentication model sent by a first analyzer (143);
   obtaining a first-type transmission feature of a first terminal device (101, 102); and
   performing (205) authentication on the first terminal device (101, 102) based on the first authentication model and the first-type transmission feature of the first terminal device (101, 102).

9. The method according to claim 8, further comprising:
   when the first terminal device (101, 102) fails to be authenticated, indicating a network device to execute a policy to restrict the first terminal device (101, 102), wherein the network device is a device that forwards a packet of the first terminal device (101, 102).

10. The method according to claim 9, further comprising: determining the policy based on
    the first-type transmission feature of the first terminal device (101, 102).

11. The method according to claim 9, further comprising:

    sending the first-type transmission feature of the first terminal device (101, 102) to the first analyzer (143); and
    receiving the policy sent by the first analyzer (143), wherein the policy is determined by the first analyzer (143) based on the first-type transmission feature of the first terminal device (101, 102).

12. The method according to any one of claims 8 to 11, further comprising:

    receiving a target device type sent by the first analyzer (143); and
    determining, based on an asset library, a plurality of terminal devices associated with the target device type, and sending second-type transmission features of the plurality of terminal devices associated with the target device type to the first analyzer (143), to enable the first analyzer (143) to obtain the first authentication model.

13. The method according to claim 12, further comprising:

    receiving a device identification model sent by the first analyzer (143);
    obtaining a second-type transmission feature of a terminal device; and
    obtaining a device type of the terminal device based on the second-type transmission feature of the terminal device and the device identification model, and updating the asset library based on the device type of the terminal device and an identifier of the terminal device.

14. A computer-readable storage medium, comprising instructions, wherein when the instructions are run on a computer, the computer is enabled to perform the method according to any one of claims 1 to 13.

15. A device, wherein the device is configured to implement the method according to any one of claims 1 to 13.

**Patentansprüche**

1. Vorrichtungsauthentifizierungsverfahren, wobei das Verfahren auf einen ersten Analysator (143) angewendet wird und das Verfahren Folgendes umfasst:

   Empfangen (201) von Übertragungsmerkmalen erster Art, die von einer Vielzahl von Endgerätevorrichtungen erster Art sind und die von einem zweiten Analysator (141) gesendet werden; Erhalten eines ersten Authentifizierungsmodells basierend auf den Übertragungsmerkmalen erster Art der Vielzahl von Endgerätevorrichtungen erster Art; und
   Senden (203) des ersten Authentifizierungsmodells an den zweiten Analysator (141).

2. Verfahren nach Anspruch 1, wobei das Verfahren ferner Folgendes umfasst:

   Empfangen von Übertragungsmerkmalen erster Art, die von einer Vielzahl von Endgerätevorrichtungen zweiter Art sind und die von einem dritten Analysator (142) gesendet werden, wobei eine Vorrichtungsart der Endgerätevorrichtung zweiter Art die gleiche ist wie eine Vorrichtungsart der Endgerätevorrichtung erster Art; Erhalten eines zweiten Authentifizierungsmodells basierend auf den Übertragungsmerkmalen erster Art der Vielzahl von Endgerätevorrichtungen zweiter Art; und Senden des zweiten Authentifizierungsmodells an den dritten Analysator (142).

3. Verfahren nach Anspruch 1, ferner umfassend:

Empfangen eines Übertragungsmerkmals erster Art, das von einer ersten Endgerätevorrichtung (101, 102) ist und das von dem zweiten Analysator (141) gesendet wird, Bestimmen einer ersten Richtlinie basierend auf dem Übertragungsmerkmal erster Art der ersten Endgerätevorrichtung (101, 102) und Senden der ersten Richtlinie an den zweiten Analysator (141); und/oder Empfangen eines Übertragungsmerkmals erster Art, das von einer zweiten Endgerätevorrichtung (104) ist und das von einem dritten Analysator (142) gesendet wird, Bestimmen einer zweiten Richtlinie basierend auf dem Übertragungsmerkmal erster Art der zweiten Endgerätevorrichtung (104) und Senden der zweiten Richtlinie an den dritten Analysator (142), wobei die erste Endgerätevorrichtung (101, 102) und die zweite Endgerätevorrichtung (104) Endgeräte sind, die nicht authentifiziert werden können.

4. Verfahren nach Anspruch 1, ferner umfassend:
Senden einer Zielvorrichtungsart an den zweiten Analysator (141), um den zweiten Analysator (141) anzuweisen, die Übertragungsmerkmale erster Art der Vielzahl von Endgerätevorrichtungen erster Art zu erhalten, wobei die Vielzahl von Endgerätevorrichtungen erster Art Endgeräte sind, die der Zielvorrichtungsart entsprechen.

5. Verfahren nach einem der Ansprüche 1 bis 4, ferner umfassend: Empfangen von Übertragungsmerkmalen zweiter Art, die von einer Vielzahl von Endgerätevorrichtungen sind und die von dem zweiten Analysator (141) und/oder dem dritten Analysator (142) gesendet werden; und Erhalten eines Vorrichtungsidentifizierungsmodells basierend auf den Übertragungsmerkmalen zweiter Art der Vielzahl von Endgerätevorrichtungen und Senden des Vorrichtungsidentifizierungsmodells an den zweiten Analysator (141) und/oder den dritten Analysator (142).

6. Verfahren nach Anspruch 5, ferner umfassend:
Erhalten von Vorrichtungsarten der Vielzahl von Endgerätevorrichtungen basierend auf den Übertragungsmerkmalen zweiter Art der Vielzahl von Endgerätevorrichtungen und dem Vorrichtungsidentifizierungsmodell, um eine Asset-Bibliothek zu erhalten, wobei die Asset-Bibliothek mindestens einen Asset-Informationseintrag umfasst und jeder des mindestens einen Asset-Informationseintrags eine Vorrichtungsart und einen Identifikator einer oder mehrerer Endgerätevorrichtungen umfasst, die der Vorrichtungsart entsprechen.

7. Verfahren nach Anspruch 6, ferner umfassend:
Empfangen von Identifikatoren und Vorrichtungsarten, die von Endgerätevorrichtungen sind und die von dem zweiten Analysator (141) und/oder dem dritten Analysator (142) gesendet werden, um die Asset-Bibliothek zu aktualisieren.

8. Vorrichtungsauthentifizierungsverfahren, wobei das Verfahren auf einen zweiten Analysator (141) angewendet wird und Folgendes umfasst:

Empfangen (204) eines von einem ersten Analysator (143) gesendeten ersten Authentifizierungsmodells; Erhalten eines Übertragungsmerkmals erster Art einer ersten Endgerätevorrichtung (101, 102); und Durchführen (205) einer Authentifizierung an der ersten Endgerätevorrichtung (101, 102) basierend auf dem ersten Authentifizierungsmodell und dem Übertragungsmerkmal erster Art der ersten Endgerätevorrichtung (101, 102).

9. Verfahren nach Anspruch 8, ferner umfassend:
wenn die erste Endgerätevorrichtung (101, 102) nicht authentifiziert werden kann, Anweisen einer Netzwerkvorrichtung, eine Richtlinie auszuführen, um die erste Endgerätevorrichtung (101, 102) einzuschränken, wobei die Netzwerkvorrichtung eine Vorrichtung ist, die ein Paket der ersten Endgerätevorrichtung (101, 102) weiterleitet.

10. Verfahren nach Anspruch 9, ferner umfassend: Bestimmen der Richtlinie basierend auf dem Übertragungsmerkmal erster Art der ersten Endgerätevorrichtung (101, 102).

**11.** Verfahren nach Anspruch 9, ferner umfassend:

Senden des Übertragungsmerkmals erster Art der ersten Endgerätevorrichtung (101, 102) an den ersten Analysator (143); und

Empfangen der von dem ersten Analysator (143) gesendeten Richtlinie, wobei die Richtlinie von dem ersten Analysator (143) basierend auf dem Übertragungsmerkmal erster Art der ersten Endgerätevorrichtung (101, 102) bestimmt wird.

**12.** Verfahren nach einem der Ansprüche 8 bis 11, ferner umfassend:

Empfangen einer von dem ersten Analysator (143) gesendeten Zielvorrichtungsart; und
Bestimmen einer Vielzahl von mit der Zielvorrichtungsart verknüpften Endgerätevorrichtungen basierend auf einer Asset-Bibliothek und Senden von Übertragungsmerkmalen zweiter Art der Vielzahl von mit der Zielvorrichtungsart verknüpften Endgerätevorrichtungen an den ersten Analysator (143), um dem ersten Analysator (143) zu ermöglichen, das erste Authentifizierungsmodell zu erhalten.

**13.** Verfahren nach Anspruch 12, ferner umfassend:

Empfangen eines von dem ersten Analysator (143) gesendeten Vorrichtungsidentifizierungsmodells;
Erhalten eines Übertragungsmerkmals zweiter Art einer Endgerätevorrichtung; und
Erhalten einer Vorrichtungsart der Endgerätevorrichtung basierend auf dem Übertragungsmerkmal zweiter Art der Endgerätevorrichtung und dem Vorrichtungsidentifizierungsmodell und Aktualisieren der Asset-Bibliothek basierend auf der Vorrichtungsart der Endgerätevorrichtung und einem Identifikator der Endgerätevorrichtung.

**14.** Computerlesbares Speichermedium, umfassend Anweisungen, wobei es, wenn die Anweisungen auf einem Computer laufen gelassen werden, dem Computer ermöglicht wird, das Verfahren nach einem der Ansprüche 1 bis 13 durchzuführen.

**15.** Vorrichtung, wobei die Vorrichtung dazu konfiguriert ist, das Verfahren nach einem der Ansprüche 1 bis 13 zu implementieren.


**Revendications**

**1.** Procédé d'authentification de dispositif, dans lequel le procédé est appliqué à un premier analyseur (143), et le procédé comprend :

la réception (201) de caractéristiques de transmission de premier type qui proviennent d'une pluralité de dispositifs terminaux de premier type et qui sont envoyées par un deuxième analyseur (141) ;
l'obtention d'un premier modèle d'authentification basé sur les caractéristiques de transmission de premier type de la pluralité de dispositifs terminaux de premier type ; et
l'envoi (203) du premier modèle d'authentification au deuxième analyseur (141).

**2.** Procédé selon la revendication 1, dans lequel le procédé comprend également :

la réception de caractéristiques de transmission de premier type qui sont d'une pluralité de dispositifs terminaux de second type et qui sont envoyées par un troisième analyseur (142), dans lequel un type de dispositif du dispositif terminal de second type est le même qu'un type de dispositif du dispositif terminal de premier type ;
l'obtention d'un second modèle d'authentification basé sur les caractéristiques de transmission de premier type de la pluralité de dispositifs terminaux de second type ; et
l'envoi du second modèle d'authentification au troisième analyseur (142).

**3.** Procédé selon la revendication 1, comprenant également :

la réception d'une caractéristique de transmission de premier type provenant d'un premier dispositif terminal (101, 102) et envoyée par le deuxième analyseur (141), la détermination d'une première politique basée sur la caractéristique de transmission de premier type du premier dispositif terminal (101, 102) et l'envoi de la première politique au deuxième analyseur (141) ; et/ou

27

la réception d'une caractéristique de transmission de premier type provenant d'un second dispositif terminal (104) et envoyée par un troisième analyseur (142), la détermination d'une seconde politique basée sur la caractéristique de transmission de premier type du second dispositif terminal (104) et l'envoi de la seconde politique au troisième analyseur (142), dans lequel le premier dispositif terminal (101, 102) et le second dispositif terminal (104) sont des terminaux qui ne peuvent pas être authentifiés.

4. Procédé selon la revendication 1, comprenant également :
l'envoi d'un type de dispositif cible au deuxième analyseur (141), pour indiquer au deuxième analyseur (141) d'obtenir les caractéristiques de transmission de premier type de la pluralité de dispositifs terminaux de premier type, dans lequel la pluralité de dispositifs terminaux de premier type sont des terminaux correspondant au type de dispositif cible.

5. Procédé selon l'une quelconque des revendications 1 à 4, comprenant également :

la réception de caractéristiques de transmission de second type qui proviennent d'une pluralité de dispositifs terminaux et qui sont envoyées par le deuxième analyseur (141) et/ou le troisième analyseur (142) ; et
l'obtention d'un modèle d'identification de dispositif basé sur les caractéristiques de transmission de second type de la pluralité de dispositifs terminaux, et l'envoi du modèle d'identification de dispositif au deuxième analyseur (141) et/ou au troisième analyseur (142).

6. Procédé selon la revendication 5, comprenant également :
l'obtention des types de dispositifs de la pluralité de dispositifs terminaux sur la base des caractéristiques de transmission de second type de la pluralité de dispositifs terminaux et du modèle d'identification du dispositif, afin d'obtenir une bibliothèque d'actifs, dans lequel la bibliothèque d'actifs comprend au moins une entrée d'information sur l'actif, et chacune de l'au moins une entrée d'information sur l'actif comprend un type de dispositif et un identifiant d'un ou de plusieurs dispositifs terminaux correspondant au type de dispositif.

7. Procédé selon la revendication 6, comprenant également :
la réception des identifiants et des types de dispositifs qui sont des dispositifs terminaux et qui sont envoyés par le deuxième analyseur (141) et/ou le troisième analyseur (142), pour mettre à jour la bibliothèque d'actifs.

8. Procédé d'authentification de dispositif, dans lequel le procédé est appliqué à un deuxième analyseur (141) et comprend :

la réception (204) d'un premier modèle d'authentification envoyé par un premier analyseur (143) ;
l'obtention d'une caractéristique de transmission de premier type d'un premier dispositif terminal (101, 102) ; et
la réalisation (205) de l'authentification sur le premier dispositif terminal (101, 102) sur la base du premier modèle d'authentification et de la caractéristique de transmission de premier type du premier dispositif terminal (101, 102).

9. Procédé selon la revendication 8, comprenant également :
lorsque le premier dispositif terminal (101, 102) ne peut pas être authentifié, l'indication à un dispositif réseau d'exécuter une politique pour restreindre le premier dispositif terminal (101, 102), dans lequel le dispositif réseau est un dispositif qui transmet un paquet du premier dispositif terminal (101, 102) .

10. Procédé selon la revendication 9, comprenant également : la détermination de la politique basée sur la caractéristique de transmission de premier type du premier dispositif terminal (101, 102).

11. Procédé selon la revendication 9, comprenant également : l'envoi de la caractéristique de transmission de premier type du premier dispositif terminal (101, 102) au premier analyseur (143) ; et
la réception de la politique envoyée par le premier analyseur (143), dans lequel la politique est déterminée par le premier analyseur (143) sur la base de la caractéristique de transmission de premier type du premier dispositif terminal (101, 102).

12. Procédé selon l'une quelconque des revendications 8 à 11, comprenant également :

la réception d'un type de dispositif cible envoyé par le premier analyseur (143) ; et
la détermination, sur la base d'une bibliothèque d'actifs, d'une pluralité de dispositifs terminaux associés au type de dispositif terminal cible, et l'envoi des caractéristiques de transmission de second type de la pluralité de dispositifs terminaux associés au type de dispositif terminal cible au premier analyseur (143), afin de permettre au premier analyseur (143) d'obtenir le premier modèle d'authentification.

13. Procédé selon la revendication 12, comprenant également :

la réception d'un modèle d'identification de dispositif envoyé par le premier analyseur (143) ;
l'obtention d'une caractéristique de transmission de second type d'un dispositif terminal ; et
l'obtention d'un type de dispositif du dispositif terminal sur la base de la caractéristique de transmission de second type du dispositif terminal et du modèle d'identification du dispositif, et la mise à jour de la bibliothèque d'actifs sur la base du type de dispositif du dispositif terminal et d'un identifiant du dispositif terminal.

14. Support de stockage lisible par ordinateur, comprenant des instructions, dans lequel, lorsque les instructions sont exécutées sur un ordinateur, l'ordinateur est activé pour réaliser le procédé selon l'une quelconque des revendications 1 à 13.

15. Dispositif, dans lequel le dispositif est configuré pour mettre en œuvre le procédé selon l'une quelconque des revendications 1 à 13.

FIG. 1

FIG. 2

| Server IP | Server port | Terminal device port | Port minimum value | Port maximum value | Protocol type | Terminal device | Time mode |
|---|---|---|---|---|---|---|---|
| 10.1.0.100 | 80 | −1 | 45527 | 45529 | TCP | 192.168.1.100\|101\|102 | 1 |
| 10.1.0.101 | −1 | 55555 | 45527 | 45528 | TCP | 192.168.1.102\|103 | 1 |
| 10.1.0.102 | 45530 | 45556 | −1 | −1 | UDP | 192.168.1.102 | 2 |
| 10.1.0.103 | 45531 | 45559 | −1 | −1 | UDP | 192.168.1.102 | 2 |

FIG. 3

| Network device | Second analyzer | First analyzer |
|---|---|---|

401: The network device obtains transmission features of a plurality of terminal devices, and sends the transmission features of the plurality of terminals to the second analyzer

402: The second analyzer receives the transmission features that are of the terminal devices and that are sent by the network device, and sends the transmission features to the first analyzer

403: The first analyzer receives the transmission features that are of the terminal devices and that are sent by each second analyzer, and trains a device identification model based on the plurality of received transmission features

404: The first analyzer sends the device identification model to each second analyzer

405: The second analyzer receives the device identification model, identifies a device type of a terminal device of an unknown device type based on the device identification model, and records the device type and an identifier of a terminal device corresponding to the device type

FIG. 4

| Device type | Device identifier |
|---|---|
| ATM | 192.168.1.102<br><br>192.168.4.102<br><br>192.168.6.102 |
| Camera | 192.168.1.103<br><br>192.168.4.103<br><br>192.168.6.103 |
| Card dispenser | 192.168.1.104 |
| Non-concerned device | 192.168.100.1 |

FIG. 5

FIG. 6

Second analyzer 700

Receiving module 710

Obtaining module 720

Authentication module 730

Sending module 740

Determining module 750

FIG. 7

First analyzer 800

Receiving module 810

Obtaining module 820

Sending module 830

Determining module 840

Update module 850

FIG. 8

FIG. 9

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016212099 A1

- US 2018109551 A1